(19) Europäisches Patentamt
European Patent Office
Office européen des brevets

(11) **EP 4 546 770 A1**

(12) **EUROPEAN PATENT APPLICATION**
published in accordance with Art. 153(4) EPC

(43) Date of publication:
**30.04.2025  Bulletin 2025/18**

(21) Application number: 23827546.5

(22) Date of filing: **22.06.2023**

(51) International Patent Classification (IPC):
*H04N 13/271* (2018.01)    *H04N 13/254* (2018.01)
*G02B 3/02* (2006.01)    *G02B 3/00* (2006.01)
*H04N 13/229* (2018.01)

(52) Cooperative Patent Classification (CPC):
**G02B 3/00; G02B 3/02; H04N 13/229;**
**H04N 13/254; H04N 13/271**

(86) International application number:
**PCT/KR2023/008695**

(87) International publication number:
**WO 2023/249437 (28.12.2023 Gazette 2023/52)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  24.06.2022  KR 20220077333
21.09.2022  KR 20220119463
29.11.2022  KR 20220162722

(71) Applicant: **LG INNOTEK CO. LTD**
**Gangseo-gu**
**Seoul 07796 (KR)**

(72) Inventors:
• **PARK, Gwui Youn**
  **Seoul 07796 (KR)**
• **OH, Hyun Jee**
  **Seoul 07796 (KR)**

(74) Representative: **DREISS Patentanwälte PartG**
**mbB**
**Friedrichstraße 6**
**70174 Stuttgart (DE)**

(54)    **CAMERA DEVICE**

(57)    A camera device, according to an embodiment of the present invention, comprises: a light-emitting unit for radiating an optical signal to an object; a light-receiving unit including an image sensor and receiving the optical signal reflected from the object; and a depth information generation unit for generating depth information of the object by using the optical signal received by the light-receiving unit, the light-emitting unit comprising a light source and a micro lens array disposed on the light source. The micro lens array comprises: a first region including a plurality of first micro lenses having a first diameter; a second region surrounding the first region and including a plurality of second micro lenses having a second diameter; and a third region surrounding the second region and including a plurality of third micro lenses having a third diameter, wherein the number and diameter of the micro lenses included in at least one of the first to third regions are correlated with the diameter of the micro lenses included in another region surrounding at least one of the first to third regions.

FIG. 4

**Description**

**[Technical Field]**

The present invention relates to a camera device.

**[Background Art]**

There-dimensional contents are applied in many fields such as games, culture, education, manufacturing, and autonomous driving, and depth map is required to acquire the three-dimensional contents. The depth map is information representing a distance in space and represents perspective information of another point with respect to one point of a two-dimensional image. As a method of acquiring the depth map, a method of projecting infrared (IR) structured light onto an object, a method using a stereo camera, a time of flight (TOF) method, or the like is used.

According to the TOF method, a distance to an object is calculated by measuring TOF, that is, the time of reflection by shooting light. The biggest advantage of the TOF method is that it quickly provides distance information on a three-dimensional space in real time. In addition, users can obtain accurate distance information without adapting a separate algorithm or performing hardware calibration. In addition, accurate depth information can be acquired by measuring a very close subject or a moving subject.

Meanwhile, to acquire the depth map, a light-emitting unit of a camera device generates an output light signal and radiates the output light signal to an object, a light-receiving unit of the camera device receives an input light signal reflected from the object, and a depth map generation unit of the camera device generates depth map of the object using the input light signal received by the light-receiving unit.

In general, to acquire depth map, the light-emitting unit of the camera device can convert an IR laser beam into a surface lighting pattern with a predetermined field of illumination (FoI) and radiate the converted IR laser beam to the object. To convert the IR laser beam into the surface lighting pattern, the light-emitting unit of the camera device may include a diffusion member, and an example of the diffusion member is a micro lens array (MLA).

The homogeneity of the surface lighting pattern may vary depending on the design of the MLA, and the safety of a user's eyes may vary. Accordingly, the design of the MLA is important.

**[Disclosure]**

**[Technical Problem]**

The present invention is directed to providing a camera device capable of extracting a depth map with high precision and resolution.

The present invention is also directed to providing a camera device including a light-emitting unit having high uniformity of a surface lighting pattern and the excellent safety of a user's eyes.

**[Technical Solution]**

A camera device according to one embodiment of the present invention includes a light-emitting unit configured to radiate a light signal to an object, a light-receiving unit including an image sensor and configured to receive the light signal reflected from the object, and a depth map generation unit configured to generate a depth map of the object using the light signal received by the light-receiving unit, wherein the light-emitting unit includes a light source, and a micro lens array disposed on the light source, the micro lens array includes a first region including a plurality of first micro lenses having a first diameter, a second region surrounding the first region and including a plurality of second micro lenses having a second diameter, and a third region surrounding the second region and including a plurality of third micro lenses having a third diameter, and the number and diameters of micro lenses included in at least one of the first to third regions is correlated with a diameter of a micro lens included in another region surrounding at least one of the first to third regions.

The first diameter, the second diameter, and the third diameter may be different.

The first region may include x1 first micro lenses disposed in a first direction, the second region may include x2 second micro lenses disposed in the first direction, the third region may include x3 third micro lenses disposed in the first direction, a product of the first diameter and the x1 may be the same as a product of the second diameter and a number that is 1 less than the x1, and a product of the second diameter and the x2 may be the same as a product of the third diameter and a number that is 1 less than the x2.

The x1 first micro lenses may be arranged in a second direction perpendicular to the first direction in the first region, the x2 second micro lenses may be arranged in the second direction in the second region, and the x3 third micro lenses may be arranged in the second direction in the third region.

The plurality of first micro lenses, the plurality of second micro lenses, and the plurality of third micro lenses may protrude in a direction toward the light source, and protrusion heights of the plurality of first micro lenses, protrusion heights of the plurality of second micro lenses, and protrusion heights of the plurality of third micro lenses may be different.

Each of the plurality of first micro lenses, the plurality of second micro lenses, and the plurality of third micro lenses may have an aspherical surface.

The aspherical shape of each of the plurality of first micro lenses, the plurality of second micro lenses, and the plurality of third micro lenses may be defined by an image height, a radius of curvature, and a conic constant.

The aspherical shape of each of the plurality of first micro lenses, the plurality of second micro lenses, and the plurality of third micro lenses may be defined by Equation 1 below:

$$Z = \frac{\frac{x^2}{R_x} + \frac{y^2}{R_y}}{1 + \sqrt{1 - (1 + K_x)\left(\frac{x}{R_x}\right)^2 - (1 + K_y)\left(\frac{y}{R_y}\right)^2}}$$

where x denotes an X-axis image height, y denotes a Y-axis image height, $R_x$ denotes an X-axis curvature radius, $R_y$ denotes a Y-axis curvature radius, $K_x$ denotes an X-axis conic constant, and $K_y$ denotes a Y-axis conic constant.

The number and diameters of first micro lenses included in the first region may be correlated with a diameter of the second micro lens included in the second region.

A distance between a center of the micro lens array to the second micro lens may be greater than a distance from the center of the micro lens array to the first micro lens.

The first diameter, the second diameter, and the third diameter may vary depending on a distance between the light source and the micro lens array.

A camera device according to another embodiment of the present invention includes a light-emitting unit configured to radiate a light signal to an object, a light-receiving unit including an image sensor and configured to receive the light signal reflected from the object, and a depth map generation unit configured to generate a depth map of the object using the light signal received by the light-receiving unit, wherein the light-emitting unit includes a light source, and a micro lens array disposed on the light source, the micro lens array includes a first region including a plurality of first micro lenses having a first average diameter and a second region surrounding the first region and including a plurality of second micro lenses having a second average diameter differing from the first average diameter, diameters of the plurality of first micro lenses are different, and diameters of the plurality of second micro lenses are different.

The diameters of the plurality of first micro lenses may be included in a range of 0.95 times to 1.05 times the first average diameter, and the diameters of the plurality of second micro lenses may be included in a range of 0.95 times to 1.05 times the second average diameter.

The second average diameter may be greater than the first average diameter.

The second average diameter may be 1.1 times or more the first average diameter.

The diameters of the plurality of first micro lenses and the diameters of the plurality of second micro lenses may each be designed by random number generation.

The diameters of the plurality of first micro lenses may be designed by the random number generation using a Gaussian function distribution according to the first average diameter and a first standard deviation, and the diameters of the plurality of second micro lenses may be designed by the random number generation using a Gaussian function distribution according to the second average diameter and a second standard deviation differing from the first standard deviation.

The diameters of the plurality of first micro lenses and the diameters of the plurality of second micro lenses may each be extracted by rejection sampling as many times as the number of plurality of first micro lenses and the number of plurality of second micro lenses.

The camera device may further include a third region including a plurality of third micro lenses surrounding the second region and having a third average diameter differing from the first average diameter and the second average diameter, wherein the number and average diameter of micro lenses included in at least one of the first to third regions may be correlated with the average diameter of the micro lenses included in another region surrounding at least one of the first to third regions.

The first region may include x1 first micro lenses disposed in a first direction, the second region may include x2 second micro lenses disposed in the first direction, the third region may include x3 third micro lenses disposed in the first direction, a product of the first average diameter and the x1 may be the same as a product of the second average diameter and a number that is 1 less than the x1, and a product of the second average diameter and the x2 may be the same as a product of the third average diameter and a number that is 1 less than the x2.

The x1 first micro lenses may be arranged in a second direction perpendicular to the first direction in the first region, the x2 second micro lenses may be arranged in the second direction in the second region, and the x3 third micro lenses may be arranged in the second direction in the third region.

The first average diameter and the second average diameter may each be an average diameter according to a first direction perpendicular to an optical axis direction, a second direction perpendicular to the optical axis direction and the first direction, or the optical axis direction.

A light output device according to one embodiment of the present invention includes a light source, and a micro lens array disposed on the light source, wherein the micro lens array includes a first region including a plurality of first micro lenses having a first average diameter, and a second region surrounding the first region and including a plurality of second micro lenses having a second average diameter differing from the first average diameter, wherein diameters of the plurality of first micro lenses are different, and diameters of the plurality of second micro lenses are different.

A camera device according to still another embodiment of the present invention includes a light-emitting unit configured to radiate a first light signal to an object, a light-receiving unit configured to receive a second light signal reflected from the object, and a depth map generation unit configured to generate a depth map of the object using the second light signal, wherein the light-emitting unit includes a light source and a micro lens array disposed on the light source, the micro lens array includes a plurality of micro lenses disposed in at least a 3*3 matrix, and the plurality of micro lenses disposed in the 3*3 matrix have different fields of illumination (FoIs).

50% or more of the micro lens array may be micro lenses having different FoIs.

At least one of an aspherical shape, a radius of curvature, and a conic constant of each of the plurality of micro lenses disposed in the 3*3 matrix may be different.

The plurality of micro lenses disposed in the 3*3 matrix may be disposed in a first region including the center of the micro lens array, the micro lens array may further include a plurality of micro lenses disposed in a second region surrounding the first region, and at least one of an aspherical shape, a radius of curvature, and a conic constant of each of the plurality of micro lenses disposed in the first region may be different.

At least one of an aspherical shape, a radius of curvature, and a conic constant of each of the plurality of micro lenses disposed in the second region may be different.

The plurality of micro lenses disposed in the first region may have a first average diameter, the plurality of micro lenses arranged in the second region may have a second average diameter differing from the first average diameter, the plurality of micro lenses disposed in the first region may have different diameters, and the plurality of micro lenses disposed in the second region may have different diameters.

A camera device according to yet another embodiment of the present invention includes a light-emitting unit configured to radiate a first light signal to an object, a light-receiving unit configured to receive a second light signal reflected from the object, and a depth map generation unit configured to generate a depth map of the object using the second light signal, wherein the light-emitting unit includes a light source and a micro lens array disposed on the light source, the micro lens array includes a first micro lens, and a plurality of second micro lenses surrounding closet to the first micro lens, the plurality of second micro lenses have different FoIs, and the first micro lens and the plurality of second micro lenses have different FoIs.

At least one of an aspherical shape, a radius of curvature, and a conic constant of each of the plurality of second micro lenses may be different.

At least one of an aspherical shape, a radius of curvature, and a conic constant of each of the first micro lens and the plurality of second micro lenses disposed may be different.

A camera device according to yet another embodiment of the present invention includes a light-emitting unit configured to radiate a first light signal to an object, a light-receiving unit configured to receive a second light signal reflected from the object, and a depth map generation unit configured to generate a depth map of the object using the second light signal, wherein the light-emitting unit includes a light source and a micro lens array disposed on the light source, the micro lens array includes a plurality of micro lenses, 50% or more of the plurality of second micro lenses have different FoIs in a first direction, or 50% or more of the plurality of micro lenses have different FoIs in the second direction perpendicular to the first direction.

At least one of an aspherical shape, a radius of curvature, and a conic constant of each of 50% or more of the plurality of micro lenses may be different.

The micro lens array may include a first region including a plurality of first micro lenses having a first average diameter, and a second region including a plurality of second micro lenses surrounding the first region and having a second average diameter differing from the first average diameter, wherein diameters of the plurality of first micro lenses may be different, diameters of the plurality of second micro lenses may be different, and the plurality of first micro lenses and the plurality of second micro lenses may have different FoIs.

The plurality of micro lenses may include a first micro lens group disposed in a first region including a center of the micro lens array, and a second micro lens group disposed in a second region disposed on the circumference of the first region and including an edge, and at least one of an aspherical shape, a radius of curvature, and a conic constant of each of lenses of the first micro lens group may be different.

At least one of an aspherical shape, a radius of curvature, and a conic constant of each of lenses of the second micro lens group may be different.

At least one of the radius of curvature and the conic constant of each of at least some of the plurality of micro lenses having the same radius of curvature and the conic constant in the first direction may be different in the second direction, or at least one of the radius of curvature and the conic constant of each of at least some of the plurality of micro lenses having the same radius of curvature and the conic constant in the second direction may be different in the first direction.

A light output device according to another embodiment of the present invention includes a light source, and a micro lens array disposed on the light source, wherein the micro lens array includes a first micro lens, and a plurality of second micro lenses surrounding closest to the first micro lens, FoIs of the first micro lens and the plurality of second micro lenses are different, and FoIs between the plurality of second micro lenses are different.

**[Advantageous Effects]**

According to the embodiments of the present invention, it is possible to obtain the camera device capable of securing the high uniformity of the surface lighting pattern and the safety of the user's eyes and extracting the depth map with high precision and resolution.

**[Description of Drawings]**

FIG. 1 is a block diagram of a camera device according to an embodiment of the present invention.

FIG. 2 is a view for describing an output light signal output by the camera device according to the embodiment of the present invention.

FIG. 3 is a schematic diagram of a light-emitting unit according to the embodiment of the present invention.

FIG. 4 is a plan view of a diffusion member according to one embodiment of the present invention.

FIGS. 5 and 6 are views for describing diameters of micro lenses forming the diffusion member according to the one embodiment of the present invention.

FIG. 7 is a cross-sectional view of a diffusion member and a light source according to one embodiment of the present invention.

FIG. 8A is a plan view of a three-dimensional drawing of a micro lens array according to a comparative example, and FIG. 8B is a perspective view of the three-dimensional drawing of the micro lens array according to the comparative example.

FIG. 9 illustrates the result of a Monte Carlo ray tracing simulation for the micro lens array according to the comparative example.

FIG. 10A illustrates the result of FDTD simulation for the micro lens array according to the comparative example, and FIG. 10B is an enlarged view of some regions of FIG. 10A.

FIG. 11A is a plan view of a three-dimensional drawing of a micro lens array according to an embodiment, and FIG. 11B is a perspective view of the three-dimensional drawing of the micro lens array according to the embodiment.

FIG. 12 illustrates the result of a Monte Carlo ray tracing simulation for the micro lens array according to the embodiment.

FIG. 13A illustrates the result of FDTD simulation for the micro lens array according to the embodiment, and FIG. 13B is an enlarged view of some regions of FIG. 13A.

FIG. 14 is a plan view of a diffusion member according to another embodiment of the present invention.

FIGS. 15 and 16 are views for describing diameters of micro lenses forming the diffusion member according to another embodiment of the present invention.

FIG. 17 is an enlarged view of a first region (710R) of FIG. 15.

FIG. 18 is a cross-sectional view of the diffusion member and a light source according to another embodiment of the present invention.

FIG. 19 illustrates a Gaussian function distribution with an average diameter of 300 $\mu$m and a standard deviation of 2 $\mu$m.

FIG. 20 is an example of a reject sampling procedure according to an embodiment of the present invention.

FIG. 21 illustrates diameters and diffraction angles for each diffraction order of micro lenses designed according to the embodiment of the present invention.

FIG. 22A is a plan view of a three-dimensional drawing of a micro lens array having a uniform diameter, and FIG. 22B is a perspective view of the three-dimensional drawing of the micro lens array having the uniform diameter.

FIG. 23A is a plan view of a three-dimensional drawing of a micro lens array according to still another embodiment of the present invention, and FIG. 23B is a perspective view of the three-dimensional drawing of the micro lens array according to still another embodiment.

FIG. 24A illustrates a Gaussian function distribution with an average diameter of 300.2 μm in an X direction and a standard deviation of 10.94 μm, and FIG. 24B illustrates a Gaussian function distribution with an average diameter of 301.2 μm in a Y direction and a standard deviation of 11.3 μm.

FIG. 25A illustrates a Gaussian function distribution set as an average field of illumination (FoI) of 54.02 degrees in the X direction and a standard deviation of 0.9746 degrees, and FIG. 25B illustrates a Gaussian function distribution set as an average FoI of 62.06 degrees in the Y direction and a standard deviation of 0.9323 degrees.

FIG. 26 illustrates diameters and FoIs of the micro lenses designed according to the embodiment of the present invention.

FIG. 27 illustrates a position of a center of the micro lens array according to the design of FIG. 26.

FIG. 28A is an FoI graph in the X direction according to the design of FIG. 26, and FIG. 28B is an FoI graph in the Y direction according to the design of FIG. 26.

FIG. 29 is a light emitting image according to the design of FIG. 29.

FIG. 30 is a plan view of a micro lens array according to yet another embodiment of the present invention.

FIG. 31 is a plan view of a micro lens array according to yet another embodiment of the present invention.

FIG. 32 is a plan view of a micro lens array according to yet another embodiment of the present invention.

FIG. 33 is a view for describing a diameter of a micro lens forming the micro lens array according to yet another embodiment of the present invention.

FIG. 34 is an example of a first region (1710R) of FIG. 32.

FIG. 35 is an exploded view of a camera module according to the embodiment of the present invention.

**[Mode for Invention]**

Hereinafter, exemplary embodiments of the present invention will be described in detail with reference to the accompanying drawings.

However, the technical spirit of the present invention is not limited to some of the described embodiments, but may be implemented in various different forms, and one or more of the components among the embodiments may be used by being selectively coupled or substituted without departing from the scope of the technical spirit of the present invention.

In addition, terms (including technical and scientific terms) used in embodiments of the present invention may be construed as meaning that may be generally understood by those skilled in the art to which the present invention pertains unless explicitly specifically defined and described, and the meanings of the commonly used terms, such as terms defined in a dictionary, may be construed in consideration of contextual meanings of related technologies.

In addition, the terms used in the embodiments of the present invention are for describing the embodiments and are not intended to limit the present invention.

In the specification, a singular form may include a plural form unless otherwise specified in the phrase, and when described as "at least one (or one or more) of A, B, and C," one or more among all possible combinations of A, B, and C may be included.

In addition, terms such as first, second, A, B, (a), and (b) may be used to describe components of the embodiments of the present invention.

These terms are only for the purpose of distinguishing one component from another component, and the nature, sequence, order, or the like of the corresponding components is not limited by these terms.

In addition, when a first component is described as being "connected," "coupled," or "joined" to a second component, it may include a case in which the first component is directly connected, coupled, or joined to the second component, but also a case in which the first component is "connected," "coupled," or "joined" to the second component by other components present between the first component and the second component.

In addition, when a certain component is described as being formed or disposed on "on (above)" or "below (under)" another component, the terms "on (above)" or "below (under)" may include not only a case in which two components are in direct contact with each other, but also a case in which one or more other components are formed or disposed between the two components. In addition, when described as "on (above) or below (under)," it may include the meaning of not only an upward direction but also a downward direction based on one component.

A camera device according to an embodiment of the present invention may be a camera for extracting a depth map using a time of flight (TOF) function. Accordingly, the camera device may be used interchangeably with a TOF camera device, a TOF camera module, a TOF camera, etc.

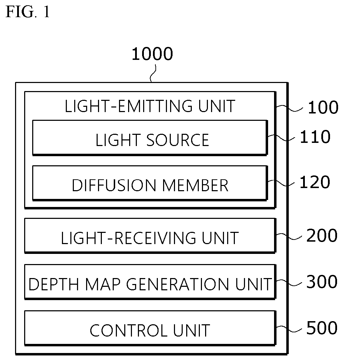

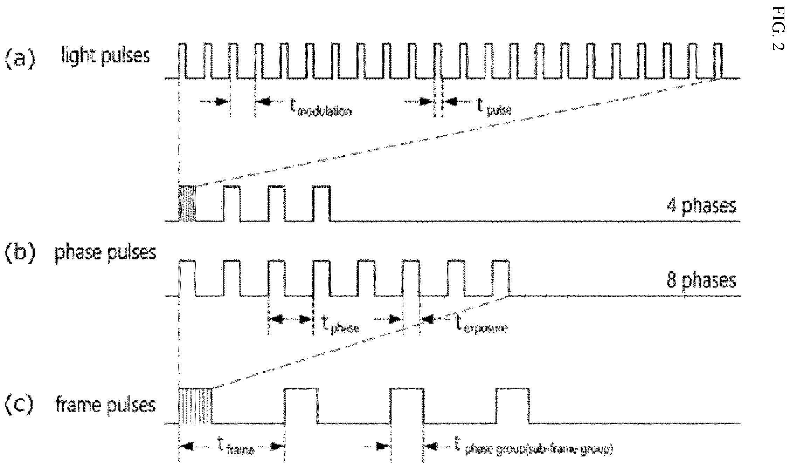

FIG. 1 is a block diagram of a camera device according to an embodiment of the present invention, and FIG. 2 is a view for describing an output light signal output by the camera device according to the embodiment of the present invention.

Referring to FIG. 1, a camera device 1000 according to the embodiment of the present invention includes a light-emitting unit 100, a light-receiving unit 200, a depth map generation unit 300, and a control unit 500.

The light-emitting unit 100 may generate and output an output light signal in the form of a pulse wave or continuous wave. The continuous wave may be in the form of a sinusoid wave or squared wave. By generating the output light signal in the form of a pulse wave or continuous wave, the camera device 1000 may detect a time difference or phase difference between the output light signal output from the light-emitting unit 100 and the input light signal input to the light-receiving unit 200 after reflected from an object. In the present specification, output light may be light output from the light-emitting unit 100 and incident on an object, and input light may be light output from the light-emitting unit 100 to reach the object, then reflected from the object and input to the light-receiving unit 200. Based on the object, the output light may be incident light, and the input light may be reflected light.

Referring to FIG. 2A, the light-emitting unit 100 may generate light pulses at a regular cycle. The light-emitting unit 100 may generate light pulses having a predetermined pulse width $t_{pulse}$ at a predetermined pulse repetition cycle $t_{modulation}$.

Referring to FIG. 2B, the predetermined number of light pulses generated by the light-emitting unit 100 may be grouped to generate one phase pulse. The light-emitting unit 100 may generate phase pulses having a predetermined phase pulse cycle $t_{phase}$ and a predetermined phase pulse width $t_{exposure}$. The phase pulse width may be referred to as $t_{illumination}$ or $t_{integration}$. Here, one phase pulse cycle $t_{phase}$ may correspond to one subframe. The subframe may be referred to as a phase frame. The predetermined number of phase pulse cycles may be grouped. A method of grouping four phase pulse cycles $t_{phase}$ may be referred to as a 4-phase method. A method of grouping eight cycles $t_{phase}$ may be referred to as a 8-phase method.

Referring to FIG. 2C, the predetermined number of phase pulses generated by the light-emitting unit 100 may be grouped to generate one frame pulse. The light-emitting unit 100 may generate a frame pulse having a predetermined frame pulse cycle $t_{frame}$ and a predetermined frame pulse width $t_{phase\ group(sub-frame\ group)}$. Here, one frame pulse cycle $t_{frame}$ may correspond to one frame. Therefore, when an object is captured at 10 FPS, 10 frame pulse cycles $t_{frame}$ per second may be repeated. In the 4-phase method, one frame may include 4 subframes. That is, one frame may be generated through the 4 sub-frames. In the 8-phase method, one frame may include 8 subframes. That is, one frame may be generated through the 8 sub-frames.

In the above description, the terms such as the light pulse, the phase pulse, and the frame pulse have been used, but the present invention is not limited thereto.

Referring back to FIG. 1, the light-emitting unit 100 may include a light source 110 and a diffusion member 120. The light source 110 generates and outputs light. Light generated by the light source 110 may be infrared rays having a wavelength of 770 to 3000 nm. Alternatively, the light generated by the light source 110 may be visible light having a wavelength of 380 to 770 nm. The light source 110 may use a light emitting diode (LED) and have a form in which a plurality of light emitting diodes are arranged in a regular pattern. In addition, the light source 110 may include an organic light emitting diode (OLED) or a laser diode (LD). Alternatively, the light source 110 may be a vertical cavity surface emitting laser (VCSEL). The VCSEL is one of laser diodes for converting an electric signal into an optical signal and may output a wavelength of about 800 to 1000 nm, for example, a wavelength of about 850 nm or about 940 nm. The light source 110 repeats blinking (on/off) at regular time intervals to generate an output light signal in the form of a pulse wave or continuous wave. The regular time interval may be a frequency of the output light signal.

The diffusion member 120 may receive the light output from the light source 110, and then diffract the received light and output the diffracted light. The diffusion member 120 may collect light and convert the collected light into parallel light. The diffusion member 120 may be a micro lens array (MLA).

Although not illustrated, the light-emitting unit 100 may further include an additional lens assembly. The lens assembly (not illustrated) may collect the light output from the light source 110 and output the collected light outward. The lens assembly may be disposed to be spaced apart from the light source 110 above the light source 110. Here, "above the light source 110" may be a side at which light is output from the light source 110. The lens assembly may include at least one lens. When the lens assembly includes a plurality of lenses, the lenses may be aligned with respect to a center axis to form an optical system. Here, the center axis may be the same as an optical axis of the optical system.

The light-receiving unit 200 may receive light reflected from the object. The light-receiving unit 200 may receive a light signal reflected from the object. In this case, the received light signal may be a light signal output by the light-emitting unit 100 and reflected from the object.

The light-receiving unit 200 may include a lens assembly, a filter, and a sensor to receive the light signal. The light signal reflected from the object may pass through the lens assembly. An optical axis of the lens assembly may be aligned with an optical axis of the sensor. The filter may be disposed between the lens assembly and the sensor. The filter may be disposed on an optical path between the object and the sensor. The filter may filter light having a predetermined wavelength range. The filter may transmit light in a specific wavelength band. The filter may transmit light having a specific wavelength. For example, the filter may transmit light in an infrared band and block light other than the infrared band. The sensor may sense light. The sensor may sense a light signal. The sensor may be an image sensor for sensing the light signal. The sensor may detect the light signal and output the detected light signal as an electrical signal. The sensor may detect light having a wavelength corresponding to the wavelength of light output from a light-emitting element. For example, the sensor may detect light in an infrared band.

For example, the sensor may receive an input light signal in synchronization with a blinking cycle of the light source 110. Specifically, the sensor may receive light in phase and out phase with the output light signal output from the light source 110. That is, the sensor may repeatedly perform an operation of receiving the input light signal when the light source is turned on and an operation of receiving the input light signal when the light source is turned off. The sensor may generate an electric signal corresponding to each reference signal using a plurality of reference signals having different phase differences. A frequency of the reference signal may be set to be the same as the frequency of the output light signal output from the light source 110. Therefore, when the light source 110 generates an output light signal using a plurality of frequencies, the sensor generates an electric signal using the plurality of reference signals corresponding to each frequency. The electric signal may include information on the amount of charge or voltage corresponding to each reference signal.

The number of reference signals according to the embodiment of the present invention may be four C1 to C4 (not illustrated). Each of the reference signals C1 to C4 may have the same frequency as the output light signal but have a 90 degree phase difference. One C1 of the four reference signals may have the same phase as the output light signal. The input light signal is retarded in phase as much as a distance at which the output light signal is returned by being reflected after being incident on the object. The sensor mixes the input light signal with each reference signal. Then, the sensor may generate an electric signal for each reference signal.

The sensor may be configured to have a structure in which a plurality of pixels are arranged in a grid shape. The sensor may be a complementary metal oxide semiconductor (CMOS) image sensor or a charge coupled device (CCD) image sensor. In addition, the sensor may include a TOF sensor for receiving IR light reflected from an object and measuring a distance using a time or phase difference. For example, each pixel may include an in phase receiving unit for receiving an input light signal in the same phase as the waveform of the output light, and an out phase receiving unit for receiving an input light signal in a phase opposite to that of the waveform of the output light. When the in phase receiving unit and the out phase receiving unit are activated with a time difference, a difference occurs in the amount of light received by the in phase receiving unit and the out phase receiving unit depending on a distance to the object, and the distance to the object may be calculated using the above difference.

The light-receiving unit 200 and the light-emitting unit 100 may be disposed side by side. The light-receiving unit 200 may be disposed next to the light-emitting unit 100. The light-receiving unit 200 may be disposed in the same direction as the light-emitting unit 100.

The depth map generation unit 300 may generate a depth map of the object using the input light signal input to the light-receiving unit 200. For example, the depth map generation unit 300 may calculate the depth map of the object using a flight time required for the output light signal output from the light-emitting unit 100 to be reflected from the object and then input to the light-receiving unit 200. For example, the depth map generation unit 300 calculates a phase difference between the output light signal and the input light signal using the electric signal received from the sensor and calculates a distance between the object and the camera device 1000 using the calculated phase difference.

Specifically, the depth map generation unit 300 may calculate the phase difference between the output light signal and the input light signal using charge amount information of the electric signal.

As described above, four electric signals may be generated for each frequency of the output light signal. Therefore, the depth map generation unit 300 may calculate a phase difference $t_d$ between the output light signal and the input light signal using Equation 1 below.

[Equation 1]

$$t_d = \arctan\left(\frac{Q_3 - Q_4}{Q_1 - Q_2}\right)$$

Here, $Q_1$ to $Q_4$ denote the charge amounts of four electric signals. $Q_1$ denotes the charge amount of the electric signal corresponding to the reference signal having the same phase as the output light signal. $Q_2$ denotes the charge amount of the electric signal corresponding to the reference signal having a phase that is 180 degrees behind that of the output light signal. $Q_3$ denotes the charge amount of the electric signal corresponding to the reference signal having a phase that is 90 degrees behind that of the output light signal. $Q_4$ denotes the charge amount of the electric signal corresponding to the reference signal having a phase that is 270 degrees behind that of the output light signal.

Then, the depth map generation unit 300 may calculate the distance between the object and the camera device 100 using the phase difference between the output light signal and the input light signal. In this case, the depth map generation unit 300 may calculate a distance d between the object and the camera device 1000 using Equation 2 below.

[Equation 2]

$$d = \frac{c}{2f} \frac{t_d}{2\pi}$$

Here, c denotes a speed of light, and f denotes a frequency of the output light.

The control unit 500 controls driving of the light-emitting unit 100, the light-receiving unit 200, and the depth map generation unit 300. The depth map generation unit 300 and the control unit 500 may be implemented in the form of a printed circuit board (PCB). In addition, the depth map generation unit 300 and the control unit 500 may be implemented in the form of different configurations. Alternatively, the control unit 500 may be included in a terminal in which the camera device 1000 according to the embodiment of the present invention is disposed. For example, the control unit 500 may be implemented in the form of an application processor (AP) of a smartphone provided with the camera device 1000 according to the embodiment of the present invention.

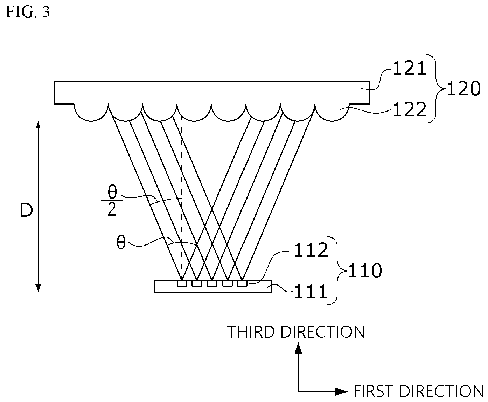

FIG. 3 is a schematic diagram of a light-emitting unit according to the embodiment of the present invention.

Referring to FIG. 3, the light-emitting unit 100 according to the embodiment of the present invention includes the light source 110 and the diffusion member 120.

According to the embodiment of the present invention, the light source 110 may include a plurality of light-emitting elements 112. Specifically, the light source 110 may be implemented in an array form in which the plurality of light-emitting elements 112 are arranged on the substrate 111 according to a predetermined rule. The substrate 111 includes a first surface and a second surface, a plurality of apertures may be formed in the first surface of the substrate 111, and the diffusion member 120 may be disposed on the substrate 111 corresponding to the plurality of apertures. The light source 110 outputs light through the apertures, and the light may be output at a predetermined divergence angle. The plurality of light-emitting elements 112 may be VCSELs.

The diffusion member 120 may be partitioned into a body portion 121 and a plurality of micro lenses 122. Specifically, the diffusion member 120 may have a shape in which the plurality of micro lenses 122 are disposed on the body portion 121 according to a predetermined rule. The diffusion member 120 may have the body portion 121 and the plurality of micro lenses 122 formed integrally. In this case, the body portion 121 and the micro lenses 122 may be formed of the same material. The body portion 121 may have a plate shape. Accordingly, the diffusion member 120 may be a micro lens array (MLA).

The diffusion member 120 may be partitioned into a first surface that receives light from the light source 110 and a second surface that outputs the light. The second surface of the diffusion member 120 may include a horizontal surface or a curved surface, and the plurality of micro lenses 122 may be disposed on the first surface of the diffusion member 120.

The plurality of micro lenses 122 may have a predetermined diameter. The plurality of micro lenses 122 may have diameters that are set so that a maximum value of light flux concentration of the plurality of micro lenses does not exceed a predetermined value. Here, the light flux concentration may refer to a ratio of the light flux incident on one micro lens to the total energy output by the light source 110. Accordingly, it is possible to increase the safety for the user's eyes by dispersing energy concentrated on one micro lens. Here, the user may be an object of the camera device 1000, a person positioned near the camera device 1000, etc.

The diffusion member 120 converts a laser beam output by the light-emitting element 112 into a surface illumination pattern. Here, the surface illumination pattern is a form in which light is uniformly spread in a predetermined region and may be used interchangeably with a flood illumination pattern, a surface light source pattern, etc. Here, uniformity may mean that light is continuously spread in space. In the case of the surface illumination pattern, since light is uniformly (continuously) spread in space, there is an advantage that when the light of the surface illumination pattern is radiated onto an object, high-resolution depth map can be acquired.

In this case, when the size of the diffusion member 120, that is, the plurality of micro lenses forming the micro lens array, is uniform, constructive interference or destructive interference may occur due to the coherent characteristic of the laser beam, and thus the homogeneity of the surface illumination pattern can deteriorate.

More specifically, when the laser beam having the coherent characteristic passes through a slit having a constant grating period, diffraction may occur according to Equation 3. That is, when a phase of light having a specific wavelength meets the grating period, and constructive interference and destructive interference occur, causing diffraction, and a phenomenon in which light is brightened or darkened at a specific angle due to the constructive interference may occur, which may be defined as a diffraction order.

[Equation 3]

$$dsin\theta = m\lambda$$

where d denotes the grating period, $\theta$ denotes the diffraction angle, m denotes the diffraction order, and $\lambda$ denotes the wavelength.

In addition, since the constructive interference and the destructive interference are further reinforced as the number of grating periods of the slit increases, the intensity of light at the diffraction angle $\theta$ is as represented by Equation 4.

[Equation 4]

$$I(\theta) = I_0 \left[ \frac{\sin\left(\frac{N\pi d}{\lambda}\sin\theta\right)}{\sin\left(\frac{\pi d}{\lambda}\sin\theta\right)} \right]^2$$

where I denotes the intensity of light of an electric field, d denotes the grating period, N denotes the number of grating periods within 1 mm (d/1 mm), $\theta$ denotes the diffraction angle, and $\lambda$ denotes the wavelength.

The embodiment of the present invention is intended to reduce a deviation of an intensity I of light according to Equation 4 and increase the homogeneity of the surface illumination pattern through the design of the micro lens forming the diffusion member.

According to the embodiment of the present invention, the diffusion member may be partitioned into a plurality of regions and may include micro lenses having different diameters for each region.

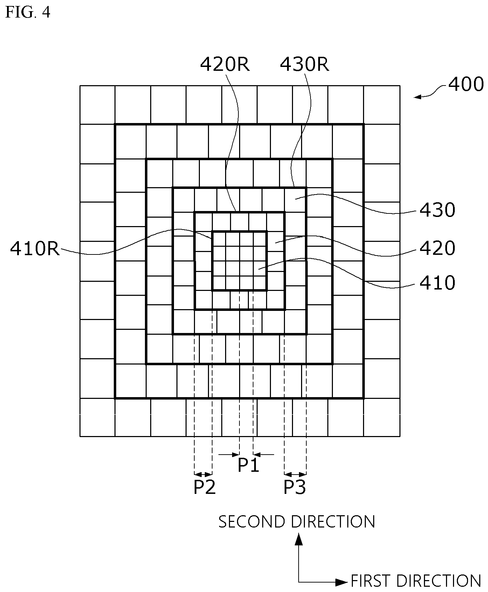

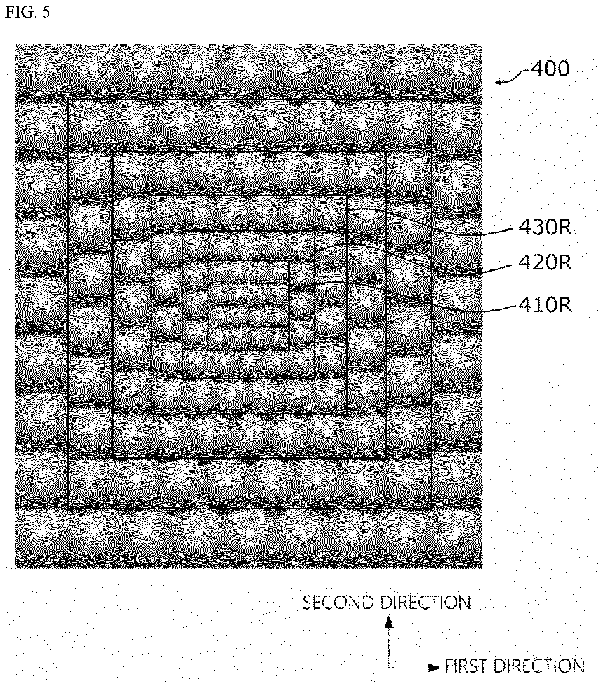

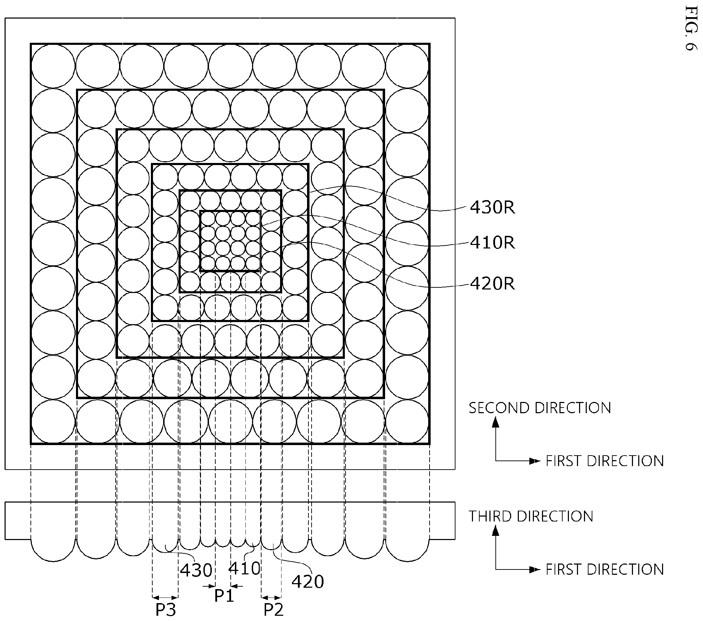

FIG. 4 is a plan view of a diffusion member according to one embodiment of the present invention, FIGS. 5 and 6 are views for describing diameters of micro lenses forming the diffusion member according to the one embodiment of the present invention, and FIG. 7 is a cross-sectional view of a diffusion member and a light source according to one embodiment of the present invention.

Referring to FIGS. 4 to 7, a diffusion member 400 according to one embodiment of the present invention includes a first region 410R including a plurality of first micro lenses 410 having a first diameter P1, a second region 420R surrounding the first region 410R and including a plurality of second micro lenses 420 having a second diameter P2, and a third region 430R surrounding the second region 420R and including a plurality of third micro lenses 430 having a third diameter P3. Here, in the description of the diffusion member 400, overlapping description of the same contents as those described with reference to FIGS. 1 to 3 regarding the diffusion member 120 will be omitted.

Here, the first region 410R may be a region including the center of the diffusion member 400.

According to the embodiment of the present invention, the first region 410R includes the plurality of first micro lenses 410 disposed in a first direction, the second region 420R includes the plurality of second micro lenses 420 disposed in the first direction, and the third region 430R includes a plurality of third micro lenses 430 disposed in the first direction. Here, the first direction may correspond to a direction intersecting an optical axis direction. In addition, the plurality of first micro lenses 410 are arranged in a second direction perpendicular to the first direction in the first region 410R, the plurality of second micro lenses 420 are arranged in the second direction in the second region 420R, and the plurality of third micro lenses 430 are arranged in the second direction in the third region 430R. In this case, the plurality of first micro lenses 410 disposed in the outermost column and the outermost row of the first region 410R may be disposed adjacent to the plurality of second micro lenses 420 disposed in the second region 420R, and the plurality of second micro lenses 420 disposed in the second region 420R may be disposed adjacent to the plurality of third micro lenses 430 disposed in the third region 430R. The plurality of second micro lenses 420 may be disposed in a row to surround the outermost portion of the first region 410R, and the plurality of third micro lenses 430 may be disposed in a row to surround the second region 420R. Accordingly, the first micro lens 410 may be disposed on one side surface of each second micro lens 420 in a direction perpendicular to the direction in which the plurality of second micro lenses 420 are disposed, and the third micro lens 430 may be disposed on the other side surface thereof. That is, the second micro lens 420 may not be disposed on both side surfaces of each second micro lens 420 in a direction perpendicular to the direction in which the plurality of second micro lenses 420 are disposed. Likewise, the third micro lens 430 may not be disposed on both side surfaces of each third micro lens 430 in a direction perpendicular to the direction in which the plurality of third micro lenses 430 are disposed. A distance from the center of the diffusion member 400, that is, the micro lens array, to the second micro lens 420 may be greater than a distance from the center of the micro lens array to the first micro lens, and a distance from the center of the micro lens array to the third micro lens 430 may be greater than the distance from the center of the micro lens array to the second micro lens 420.

In the present specification, the first to third regions 410R to 430R including the first to third micro lenses having the first to third diameters are mainly described, but this is for the sake of convenience of description, and the present invention is not limited thereto. The embodiment of the present invention may be extended to a fourth region surrounding the third region 430R and including a plurality of fourth micro lenses having the fourth diameter, a fifth region surrounding the fourth region and including a plurality of fifth micro lenses having the fifth diameter, etc.

Here, the first diameter P1, the second diameter P2, and the third diameter P3 may be interchangeably used with a first pitch P1, a second pitch P2, and a third pitch P3, respectively. Here, the diameter may refer to a length of the micro lens in the first direction or the second direction. However, the diameter may refer to a length of the micro lens in a direction other than the first direction and the second direction.

According to the embodiment of the present invention, the first region 410R, the second region 420R, and the third region 430R are disposed in a region a defined by Equation 5.

[Equation 5]

$$\alpha = 2D\tan\theta$$

where a denotes a width of a region in which $1/e^2$ times the maximum intensity of light reaches, D denotes a distance from the light source 110 to the diffusion member 400, and $\theta$ may be defined as an angle at which $1/e^2$ times the maximum intensity of light of the light source 110 is output.

In this regard, referring to FIG. 7, the light source 110 and the diffusion member 400 are disposed to be spaced a predetermined distance D from each other. In addition, the light-emitting element 112 outputs light at a predetermined angle $\theta$. When a virtual normal line perpendicular to the substrate 111 is drawn from the center of the light-emitting element 112, an angle $\theta/2$ formed by the virtual normal line and the light is half of the divergence angle $\theta$ of light output by the light-emitting element 112. The plurality of light-emitting elements 112 may all have the same specifications, and the divergence angles $\theta$ at which the plurality of light-emitting elements 112 output light may be the same.

For example, the light-emitting element 112 may emit a predetermined amount of energy from -20 degrees to 20 degrees with respect to the optical axis. However, it can be seen that the amount of energy is close to zero at an angle of -15 degrees, +15 degrees, -15 degrees or less, or 15 degrees or more. That is, most of the energy is present in a predetermined angle with respect to the optical axis of the light-emitting element. Accordingly, it is inefficient to set all angles at which the amount of energy is not zero as the divergence angle of the light-emitting element, and it is efficient to set an angle at which a predetermined amount of energy or more is emitted as the divergence angle of the light-emitting element. Accordingly, the divergence angle of the light source 110 may be set as an angle at which $1/e^2$ times the maximum intensity of light of the light source 110 is output, and the region a defined by Equation 5 may be referred to as an effective light region.

In this case, the first diameter P1, the second diameter P2, and the third diameter P3 may be different. In this way, when the first region 410R, the second region 420R, and the third region 430R of the micro lenses having different diameters are disposed in the effective light region, the energy of the output light is dispersed, thereby increasing the safety for the user's eyes and preventing the deterioration of homogeneity due to interference.

According to the embodiment of the present invention, the number of micro lenses included in at least one of the first to third regions 410R, 420R, and 430R is correlated with the diameter of the micro lens included in at least one of the first to third regions 410R, 420R, and 430R and the diameter of the micro lens included in another region surrounding at least one of the first to third regions 410R, 420R, and 430R. According to the embodiment of the present invention, the number and diameters of micro lenses included in at least one of the first to third regions 410R, 420R, and 430R is correlated with the diameter of the micro lens included in another region surrounding at least one of the first to third regions 410R, 420R, and 430R. The number of region-specific micro lenses according to the embodiment of the present invention may be represented by Equation 6.

[Equation 6]

$$P_n \times x_n = P_{n+1} \times (x_n - 1)$$

where $P_n$ denotes a diameter of a micro lens disposed in an $n^{th}$ region, $P_{n+1}$ denotes a diameter of a micro lens disposed in an $(n+1)^{th}$ region, and $x_n$ denotes the number of micro lenses disposed in the first direction or the number of micro lenses disposed in the second direction in the $n^{th}$ region. $x_n$ does not refer to the number of all micro lenses included in the $n^{th}$ region. For example, $x_1$ may be four micro lenses disposed in the first direction or the second direction in the first region, $x_2$ may be five micro lenses disposed in the first direction or the second direction in the second region, and $x_3$ may be six micro lenses disposed in the first direction or the second direction in the third region.

Accordingly, the number of micro lenses included in the $n^{th}$ region may be correlated with the diameter of the micro lens included in the $n^{th}$ region and the diameter of the micro lens included in the $(n+1)^{th}$ region surrounding the $n^{th}$ region. The number and diameters of micro lenses included in the $n^{th}$ region may be correlated with the diameters of the micro lenses included in the (n+1)$^{th}$ region surrounding the n$^{th}$ region.

For example, the number of first micro lenses 410 included in the first region 410R may be correlated with the first diameter P1 of the first micro lens 410 included in the first region 410R and the second diameter P2 of the second micro lens 420 included in the second region 420R. The number of first micro lenses 410 included in the first region 410R and the first diameter P1 may be correlated with the second diameter P2 of the second micro lens 420 included in the second region 420R. In addition, the number of second micro lenses 420 included in the second region 420R may be correlated with the second diameter P2 of the second micro lens 420 included in the second region 420R and the third diameter P3 of the third micro lens 430 included in the third region 430R. The number of second micro lenses 420 included in the second region 420R and the second diameter P2 may be correlated with the third diameter P3 of the third micro lens 430 included in the third region 430R.

For example, a product of the first diameter P1 and the number of first micro lenses 410 disposed in the first direction may be equal to a product of the second diameter P2 and a number that is one less than the number of first micro lenses 410 disposed in the first direction, and a product of the second diameter P2 and the number of second micro lenses 420 disposed in the first direction may be equal to a product of the third diameter P3 and a number that is one less than the number of second micro lenses 420 disposed in the first direction. Accordingly, constructive interference and destructive interference due to overlapping of diffraction angles according to a diffraction order for each region can be minimized, and the arrangement of the micro lens array is easy.

Table 1 is an example of the micro lens array according to the embodiment of the present invention under the condition that the distance D from the light source 110 to the diffusion member 400 is more than 5.7 mm (D>5.7 mm).

Table 1

| n | Diameter | Number | Diffraction angle | | | | |
|---|---|---|---|---|---|---|---|
| | | | 1$^{st}$ order | 2$^{nd}$ order | 3$^{th}$ order | 4$^{th}$ order | 5$^{th}$ order |
| 1 | 300 μm | 4 | 0.00313 | 0.00627 | 0.00940 | 0.01253 | 0.01567 |
| 2 | 400 μm | 5 | 0.00235 | 0.00470 | 0.00705 | 0.00940 | 0.01175 |
| 3 | 500 μm | 6 | 0.00188 | 0.00376 | 0.00564 | 0.00752 | 0.00940 |
| 4 | 600 μm | 7 | 0.00157 | 0.00313 | 0.00470 | 0.00627 | 0.00783 |
| 5 | 700 μm | 8 | 0.00134 | 0.00269 | 0.00403 | 0.00537 | 0.00671 |
| 6 | 800 μm | 9 | 0.00118 | 0.00235 | 0.00353 | 0.00470 | 0.00588 |

where n denotes the order of the regions, diameter is the diameter of the region-specific micro lens, and number is the number of micro lenses repeatedly disposed in the first direction or the number of micro lenses repeatedly disposed in the second direction.

For example, four micro lenses having a diameter of 300 μm may be arranged in a row in the first direction in the first region, five micro lenses having a diameter of 400 μm may be disposed in a row in the first direction in the second region, six micro lenses having a diameter of 500 μm may be disposed in a row in the first direction in the third region, seven micro lenses having a diameter of 600 μm may be disposed in a row in the first direction in the fourth region, eight micro lenses having a diameter of 700 μm may be disposed in a row in the first direction in the fifth region, and nine micro lenses having a diameter of 800 μm may be disposed in a row in the first direction in the sixth region.

Referring to Equation 6, when the diameter is 300 μm when n=1 and 400 μm when n=2, the number of micro lenses disposed in a row in the first direction at n=1 may be 4. Likewise, when the diameter is 400 μm when n=2 and 500 μm when n=3, the number of micro lenses disposed in a row in the first direction at n=2 may be 5.

In addition, when the diameter is 800 μm when n=6 and 900 μm when n=7, the number of micro lenses disposed in a row in the first direction at n=6 may be 9.

When the micro lens array is arranged according to these conditions, constructive interference and destructive interference due to overlapping of diffraction angles according to the diffraction order for each region can be minimized, and since three or more types of micro lenses having different diameters are disposed in the effective optical region, the arrangement of the micro lens array can be safer for the user's eyes.

Table 2 is an example of the micro lens array according to the embodiment of the present invention under the condition that the distance D from the light source 110 to the diffusion member 400 is more than 1.2 mm (D>1.2 mm).

Table 2

| n | Diameter | Number | Diffraction angle | | | | |
|---|---|---|---|---|---|---|---|
| | | | 1st order | 2nd order | 3th order | 4th order | 5th order |
| 1 | 50um | 6 | 0.01880 | 0.03760 | 0.05640 | 0.07520 | 0.09400 |
| 2 | 60um | 7 | 0.01567 | 0.03133 | 0.04700 | 0.06267 | 0.07833 |
| 3 | 70um | 8 | 0.01343 | 0.02686 | 0.04029 | 0.05371 | 0.06714 |
| 4 | 80um | 9 | 0.01175 | 0.02350 | 0.03525 | 0.04700 | 0.05875 |
| 5 | 90um | 10 | 0.01044 | 0.02089 | 0.03133 | 0.04178 | 0.05222 |
| 6 | 100um | 11 | 0.00940 | 0.01880 | 0.02820 | 0.03760 | 0.04700 |
| 7 | 110um | 12 | 0.00855 | 0.01709 | 0.02564 | 0.03418 | 0.04273 |
| 8 | 120um | 13 | 0.00783 | 0.01567 | 0.02350 | 0.03133 | 0.03917 |

where n denotes the order of the regions, diameter is the diameter of the region-specific micro lens, and number is the number of micro lenses repeatedly disposed in the first direction or the number of micro lenses repeatedly disposed in the second direction. It can be seen that the micro lens array is also designed to satisfy Equation 6 in Table 2. When the micro lens array is arranged according to these conditions, constructive interference and destructive interference due to overlapping of diffraction angles according to the diffraction order for each region can be minimized, and since three or more types of micro lenses having different diameters are disposed in the effective optical region, the arrangement of the micro lens array can be safer for the user's eyes.

Table 3 is an example of the micro lens array according to the embodiment of the present invention under the condition that the distance D from the light source 110 to the diffusion member 400 is more than 0.35 mm (D>0.35 mm).

Table 3

| n | Diameter | Number | Diffraction angle | | | | |
|---|---|---|---|---|---|---|---|
| | | | 1st order | 2nd order | 3th order | 4th order | 5th order |
| 1 | 20um | 3 | 0.04700 | 0.09400 | 0.14100 | 0.18800 | 0.23500 |
| 2 | 30um | 4 | 0.03133 | 0.06267 | 0.09400 | 0.12533 | 0.15667 |
| 3 | 40um | 5 | 0.02350 | 0.04700 | 0.07050 | 0.09400 | 0.11750 |
| 4 | 50um | 6 | 0.01880 | 0.03760 | 0.05640 | 0.07520 | 0.09400 |
| 5 | 60um | 7 | 0.01567 | 0.03133 | 0.04700 | 0.06267 | 0.07833 |
| 6 | 70um | 8 | 0.01343 | 0.02686 | 0.04029 | 0.05371 | 0.06714 |

where n denotes the order of the regions, diameter is the diameter of the region-specific micro lens, and number is the number of micro lenses repeatedly disposed in the first direction or the number of micro lenses repeatedly disposed in the second direction. It can be seen that the micro lens array is also designed to satisfy Equation 6 in Table 3. When the micro lens array is arranged according to these conditions, constructive interference and destructive interference due to overlapping of diffraction angles according to the diffraction order for each region can be minimized, and since three or more types of micro lenses having different diameters are disposed in the effective optical region, the arrangement of the micro lens array can be safer for the user's eyes.

Referring to Tables 1 to 3, it can be seen that the diameter of the micro lens varies depending on the distance D between the light source 110 and the diffusion member 400. Here, the distance D between the light source 110 and the diffusion member 400 may be the vertical distance between the first surface of the light source 110 and the first surface of the diffusion member 400. The first surface of the light source 110 is one surface on which the apertures are disposed. The first surface of the diffusion member 400 is one surface on which light is received by each of the plurality of micro lenses 410, 420, and 430 from the light source 110. Specifically, since the plurality of micro lenses 410, 420, and 430 are disposed in an embossing form on the first surface of the diffusion member 400, the first surface of the diffusion member 400 may be one surface that connects points through which the optical axis passes through each of the plurality of micro lenses 410, 420, and 430. Therefore, the distance between the diffusion member 400 and the light source 110 may be the vertical distance between one point through which the optical axes of the micro lenses 410, 420, and 430 pass and the first surface of the light source 110.

It can be seen that as shown in Table 1, when D>5.7 mm, the diameter of the micro lens is hundreds of μm, for example, 300 μm or more, for example, ranges from 300 μm to 800 μm, and as shown in Table 2, when D>1.2 mm, the diameter of the micro lens is tens of μm to hundreds of μm, for example, 50 μm or more, for example, ranges from 50 μm to 120 μm, and as shown in Table 3, when D>0.35 mm, the diameter of the micro lens is tens of μm, for example, 20 μm or more, for example, ranges from 20 μm to 70 μm. In this way, when the diameter of the micro lens varies depending on the distance D between the light source 110 and the diffusion member 400, the light flux concentration on a specific micro lens can be reduced, thereby making the user's eyes safe.

Meanwhile, according to the embodiment of the present invention, the plurality of first micro lenses 410 included in the first region 410R, the plurality of second micro lenses 420 included in the second region 420R, and the plurality of third micro lenses 430 included in the third region 430R may protrude in a direction toward the light source 110. In the present specification, the direction from the diffusion member 400 to the light source 110 may be referred to as a third direction perpendicular to the first direction and the second direction, which are plane directions of the diffusion member 400. Here, the third direction may be the same as the optical axes direction of the first to third micro lenses 410, 420, and 430.

In this case, protrusion heights h1 of the plurality of first micro lenses 410, protrusion heights h2 of the plurality of second micro lenses 420, and protrusion heights h3 of the plurality of third micro lenses 430 may be different. Accordingly, since boundaries of the first region 410R, the second region 420R, and the third region 430R are determined by the protrusion height of each micro lens, the periodicity of the grating is broken, and constructive interference and destructive interference due to the overlapping of diffraction angles according to the diffraction order of each region can be minimized.

In this case, the plurality of first micro lenses 410 included in the first region 410R, the plurality of second micro lenses 420 included in the second region 420R, and the plurality of third micro lenses 430 included in the third region 430R may each have an aspherical shape. For example, the aspherical shapes of the first micro lens 410, the second micro lens 420, and the third micro lens 430 may be defined by an image height, a radius of curvature, and a conic constant. For example, the aspherical shapes of the first micro lens 410, the second micro lens 420, and the third micro lens 430 may be defined by Equation 7.

[Equation 7]

$$ z = \frac{\frac{h^2}{R}}{1 + \sqrt{1 - (1 + K)\left(\frac{h}{R}\right)^2}} $$

where Z denotes the aspherical shape of the lens, h denotes the image height, R denotes the radius of curvature, and K denotes the conic constant.

Since the micro lens array is arranged in a two dimension manner, the aspherical shapes of the first micro lens 410, the second micro lens 420, and the third micro lens 430 may be defined by Equation 8.

[Equation 8]

$$ z = \frac{\frac{x^2}{R_x} + \frac{y^2}{R_y}}{1 + \sqrt{1 - (1 + K_x)\left(\frac{x}{R_x}\right)^2 - (1 + K_y)\left(\frac{y}{R_y}\right)^2}} $$

where x denotes an X-axis image height, y denotes a Y-axis image height, $R_x$ denotes an X-axis curvature radius, $R_y$ denotes a Y-axis curvature radius, $K_x$ denotes an X-axis conic constant, and $K_y$ denotes a Y-axis conic constant.

Accordingly, the FoI of the laser beam passing through the micro lens array may be defined, and the light flux concentration on the specific micro lens may be set so as not to exceed a predetermined value.

Hereinafter, simulation results according to embodiments and comparative examples of the present invention will be described.

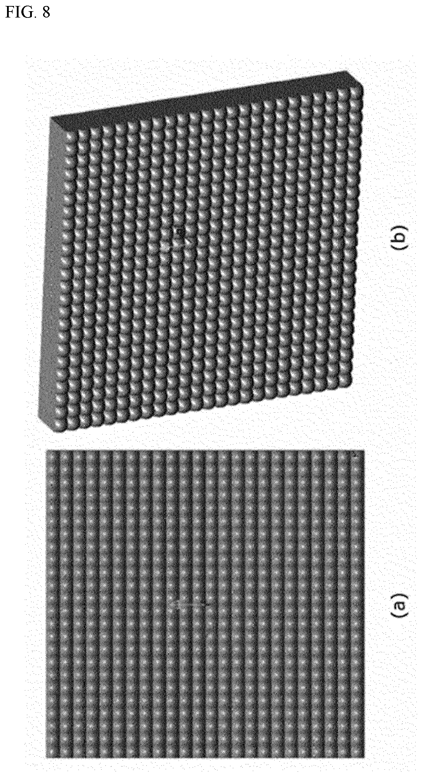

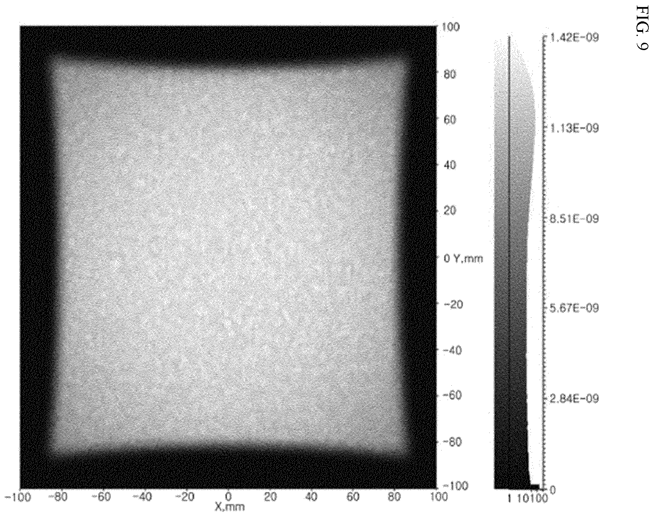

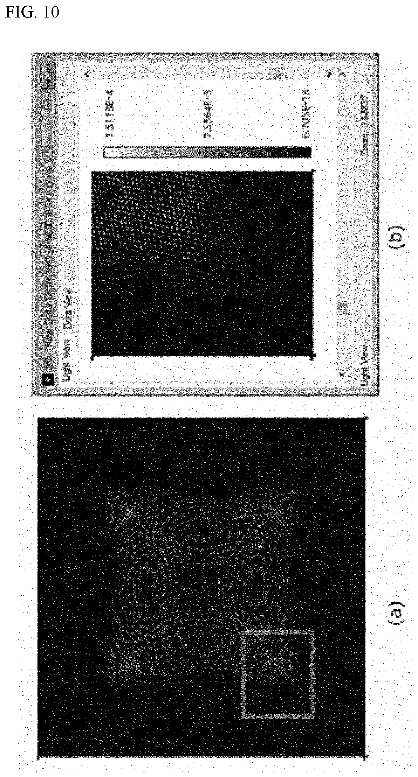

FIG. 8A is a plan view of a three-dimensional drawing of a micro lens array according to a comparative example, FIG. 8B is a perspective view of the three-dimensional drawing of the micro lens array according to the comparative example, FIG. 9 illustrates the result of a Monte Carlo ray tracing simulation for the micro lens array according to the comparative example, FIG. 10A illustrates the result of FDTD simulation for the micro lens array according to the comparative example, and FIG. 10B is an enlarged view of some regions of FIG. 10A.

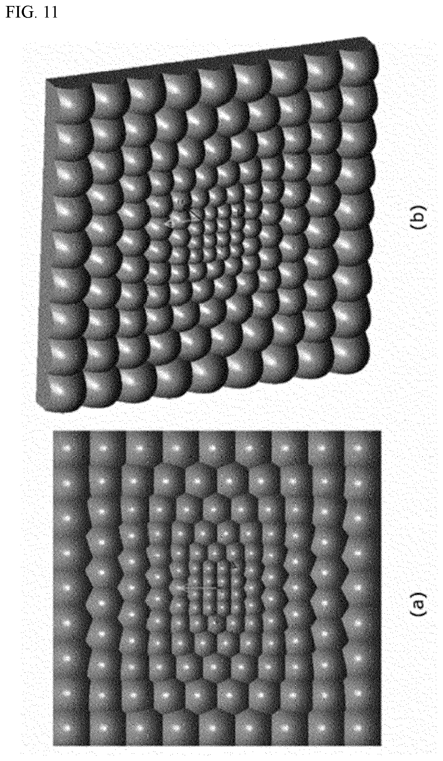

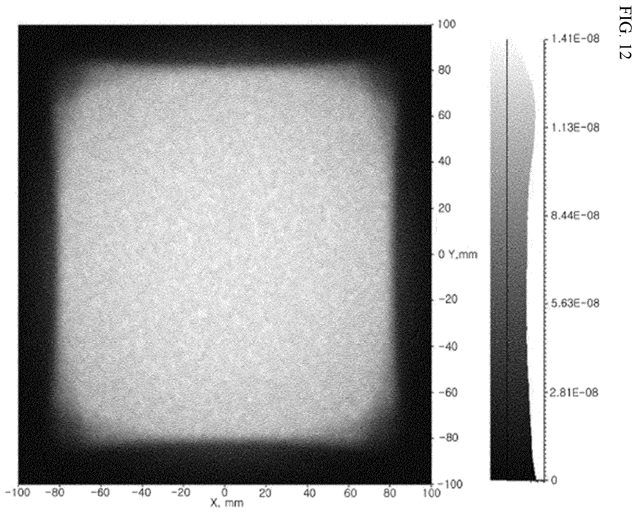

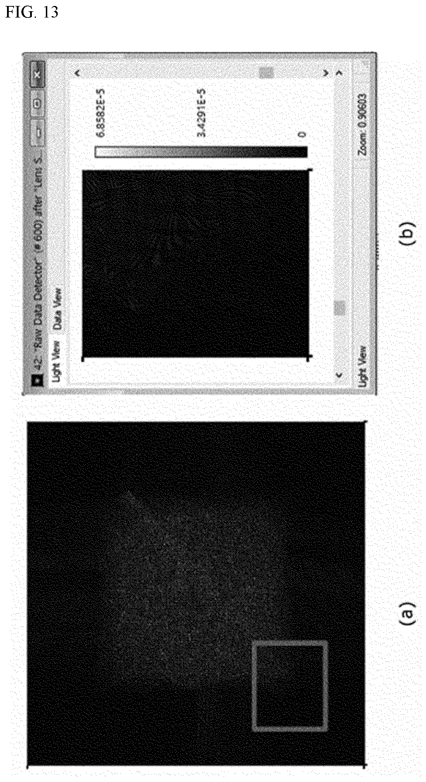

FIG. 11A is a plan view of a three-dimensional drawing of a micro lens array according to an embodiment, FIG. 11B is a perspective view of the three-dimensional drawing of the micro lens array according to the embodiment, FIG. 12 illustrates the result of a Monte Carlo ray tracing simulation for the micro lens array according to the embodiment, FIG. 13A illustrates the result of FDTD simulation for the micro lens array according to the embodiment, and FIG. 13B is an enlarged view of some regions of FIG. 13A.

The micro lens array according to the comparative example is designed so that the plurality of micro lenses are arranged in an array shape and all of the plurality of micro lenses have the same diameter.

Referring to FIGS. 8A, 8B, 9, 10A, and 10B, as the result of the Monte Carlo ray tracing simulation for the micro lens array according to the comparative example, an edge angle of a peripheral portion is sharply formed, and as the result of the FDTD simulation for the micro lens array according to the comparative example, constructive interference due to diffraction occurs strongly.

In contrast, referring to FIGS. 11A, 11B, 12, 13A, and 13B, as the result of the Monte Carlo ray tracing simulation for the micro lens array according to the embodiment, it can be seen that an edge angle of a peripheral portion is lost compared to the comparative example, and as the result of the FDTD simulation for the micro lens array according to the embodiment, it can be seen that constructive interference due to diffraction is significantly weakened.

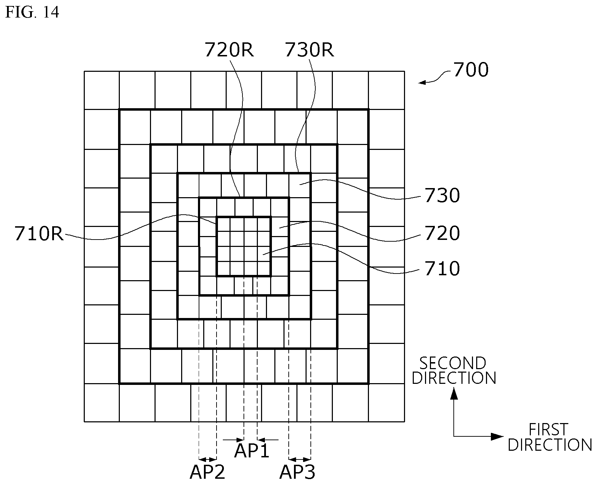

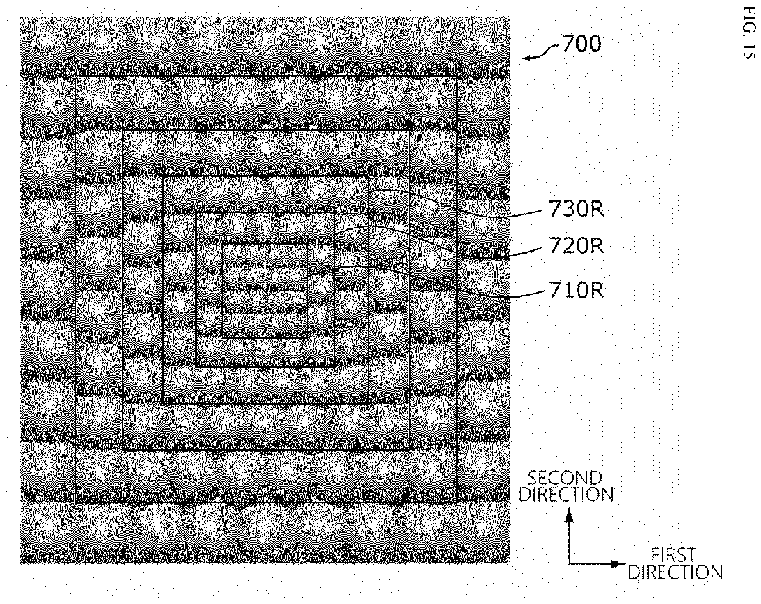

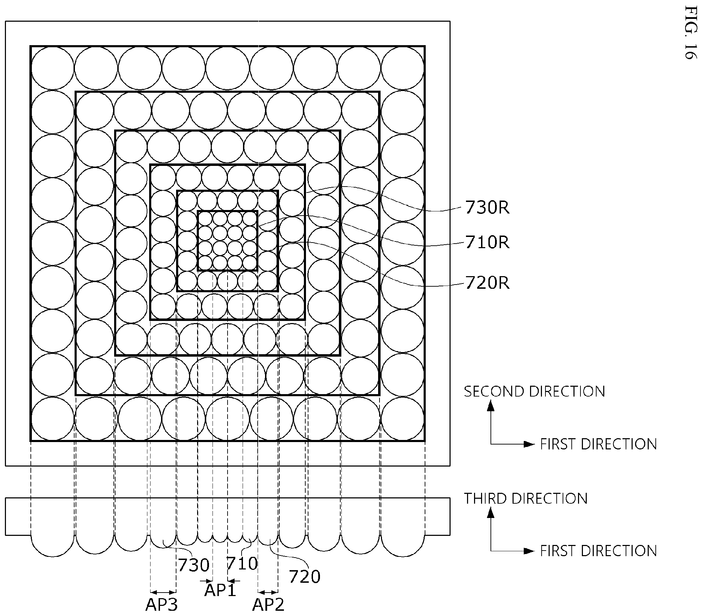

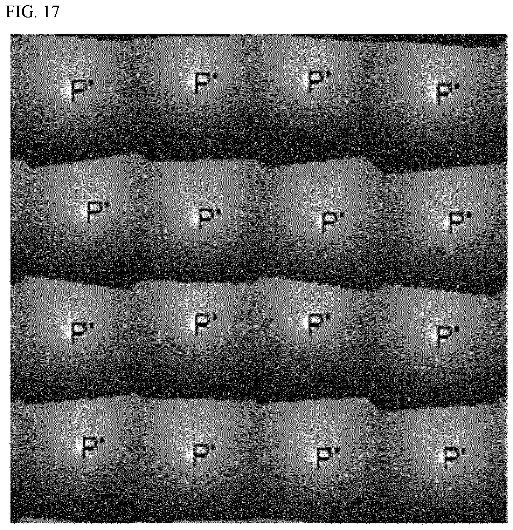

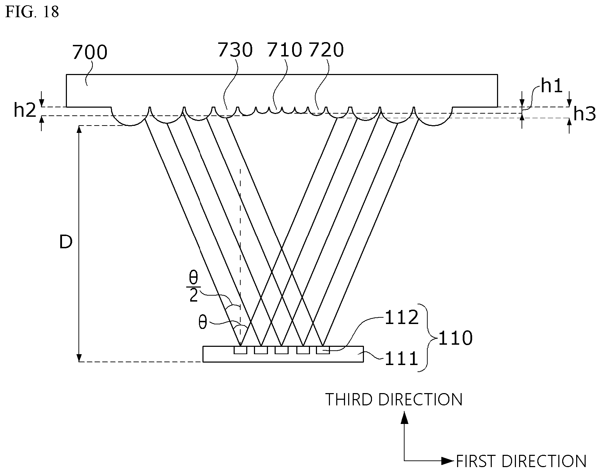

FIG. 14 is a plan view of a diffusion member according to another embodiment of the present invention, FIGS. 15 and 16 are views for describing diameters of micro lenses forming the diffusion member according to another embodiment of the present invention, FIG. 17 is an enlarged view of a first region (710R) of FIG. 15, and FIG. 18 is a cross-sectional view of the diffusion member and a light source according to another embodiment of the present invention. For the sake of convenience of description, overlapping description for the same contents as those described with reference to FIGS. 1 to 13 will be omitted.

Referring to FIGS. 14 to 18, a diffusion member 700 according to another embodiment of the present invention includes a first region 710R including a plurality of first micro lenses 710 having a first average AP1, a second region 720R surrounding the first region 710R and including a plurality of second micro lenses 720 having a second average diameter AP2, and a third region 730R surrounding the second region 720R and including a plurality of third micro lenses 730 having a third average diameter AP3. Here, in the description of the diffusion member 700, overlapping description of the same contents as those described with reference to FIGS. 1 to 3 regarding the diffusion member 120 will be omitted.

Here, the first region 710R may be a region including the center of the diffusion member 700. The center of the diffusion member 700 may be the center of the micro lens array of the diffusion member 700.

According to the embodiment of the present invention, the first region 710R includes the plurality of first micro lenses 710 disposed in a first direction, the second region 720R includes the plurality of second micro lenses 720 disposed in the first direction, and the third region 730R includes a plurality of third micro lenses 730 disposed in the first direction. Here, the first direction may correspond to a direction intersecting an optical axis direction. In addition, the plurality of first micro lenses 710 are arranged in the second direction perpendicular to the first direction and intersecting the optical axis direction in the first region 710R, the plurality of second micro lenses 720 are arranged in the second direction in the second region 720R, and the plurality of third micro lenses 730 are arranged in the second direction in the third region 730R. In this case, the plurality of first micro lenses 710 disposed in the outermost column and the outermost row of the first region 710R may be disposed adjacent to the plurality of second micro lenses 720 disposed in the second region 720R, and the plurality of second micro lenses 720 disposed in the second region 720R may be disposed adj acent to the plurality of third micro lenses 730 disposed in the third region 730R. The plurality of second micro lenses 720 may be disposed in a row to surround the outermost portion of the first region 710R, and the plurality of third micro lenses 730 may be disposed in a row to surround the second region 720R. Accordingly, the first micro lens 710 may be disposed on one side surface of each second micro lens 720 in a direction perpendicular to the direction in which the plurality of second micro lenses 720 are disposed, and the third micro lens 730 may be disposed on the other side surface thereof. That is, the second micro lens 720 may not be disposed on both side surfaces of each second micro lens 720 in a direction perpendicular to the direction in which the plurality of second micro lenses 720 are disposed. Likewise, the third micro lens 730 may not be disposed on both side surfaces of each third micro lens 730 in a direction perpendicular to the direction in which the plurality of third micro lenses 730 are disposed. A distance from the center of the diffusion member 700, that is, the micro lens array, to the second micro lens 720 may be greater than a distance from the center of the micro lens array to the first micro lens 710, and a distance from the center of the micro lens array to the third micro lens 730 may be greater than the distance from the center of the micro lens array to the second micro lens 720.

In the present specification, the first to third regions 710R to 730R including the first to third micro lenses having the first to third average diameters are mainly described, but this is for the sake of convenience of description, and the present invention is not limited thereto. The embodiment of the present invention may be extended to a fourth region surrounding the third region 730R and including a plurality of fourth micro lenses having the fourth diameter, a fifth region surrounding the fourth region and including a plurality of fifth micro lenses having the fifth diameter, etc.

Here, the first average diameter AP1, the second average diameter AP2, and the third average diameter AP3 may be interchangeably used with a first average pitch AP1, a second average pitch AP2, and a third average pitch AP3, respectively. Here, the diameter may refer to a length of the micro lens in the first direction or the second direction. However, the diameter may refer to a length of the micro lens in a direction other than the first direction and the second direction. For example, the diameter may refer to a length of the micro lens array in the first direction, the second direction, or the third direction that is the optical axis direction.

According to the embodiment of the present invention, the first region 710R, the second region 720R, and the third region 730R are disposed in a region a defined by Equation 9.

$$[\text{Equation 9}]$$

$$\alpha = 2D\tan\theta$$

where a denotes a width of a region in which $1/e^2$ times the maximum intensity of light reaches, D denotes a distance from the light source 110 to the diffusion member 700, and $\theta$ may be defined as an angle at which $1/e^2$ times the maximum intensity of light of the light source 110 is output.

In this regard, referring to FIG. 18, the light source 110 and the diffusion member 700 are disposed to be spaced a predetermined distance D from each other. In addition, the light-emitting element 112 outputs light at a predetermined angle $\theta$. When a virtual normal line perpendicular to the substrate 111 is drawn from the center of the light-emitting element 112, an angle $\theta/2$ formed by the virtual normal line and the light is half of the divergence angle $\theta$ of light output by the light-emitting element 112. The plurality of light-emitting elements 112 may all have the same specifications, and the divergence angles $\theta$ at which the plurality of light-emitting elements 112 output light may be the same.

For example, the light-emitting element 112 may emit a predetermined amount of energy from -20 degrees to 20 degrees with respect to the optical axis. However, it can be seen that the amount of energy is close to zero at an angle of -15 degrees, +15 degrees, -15 degrees or less, or 15 degrees or more. That is, most of the energy is present in a predetermined angle with respect to the optical axis of the light-emitting element. Accordingly, it is inefficient to set all angles at which the amount of energy is not zero as the divergence angle of the light-emitting element, and it is efficient to set an angle at which a predetermined amount of energy or more is emitted as the divergence angle of the light-emitting element. Accordingly, the divergence angle of the light source 110 may be set as an angle at which $1/e^2$ times the maximum intensity of light of the light source 110 is output, and the region a defined by Equation 9 may be referred to as an effective light region.

In this case, the first average diameter AP1, the second average diameter AP2, and the third average diameter AP3 may be different. According to the embodiment of the present invention, the second average diameter AP2 may be greater than the first average diameter AP1, and the third average diameter AP3 may be greater than the second average diameter AP2. According to the embodiment of the present invention, the second average diameter AP2 may be 1.1 times or more greater than the first average diameter AP1, and the third average diameter AP3 may be 1.1 times or more greater than the second average diameter AP2. According to the embodiment of the present invention, a ratio of the second average diameter AP2 to the first average diameter AP1 may be greater than a ratio of the third average diameter AP3 to the second average diameter AP2. Accordingly, the energy of the output light may be dispersed, thereby increasing the safety for the user's eyes and preventing the deterioration of homogeneity due to interference.

As illustrated in FIG. 17, according to the embodiment of the present invention, the plurality of first micro lenses 710 having the first average diameter AP1 in the first region 710R may have different diameters. Here, the diameter may be a diameter in the first direction, a diameter in the second direction perpendicular to the first direction, or a diameter in the third direction that is the optical axis direction, and the first direction and the second direction may be directions perpendicular to the third direction. According to the embodiment of the present invention, the plurality of first micro lenses 710 may have different diameters in a range of 0.95 to 1.05 times, preferably, 0.97 to 1.03 times, and more preferably, 0.98 to 1.02 times the first average diameter AP1. Accordingly, it is possible to minimize constructive interference and destructive interference due to overlapping of diffraction angles according to diffraction orders of the plurality of first micro lenses 710 in the first region 710R.

Likewise, the plurality of second micro lenses 720 having the second average diameter AP2 in the second region 720R may have different diameters. According to the embodiment of the present invention, the plurality of second micro lenses 720 may have different diameters in a range of 0.95 to 1.05 times, preferably, 0.97 to 1.03 times, and more preferably, 0.98 to 1.02 times the second average diameter AP2. Accordingly, it is possible to minimize constructive interference and destructive interference due to overlapping of diffraction angles according to diffraction orders of the plurality of second micro lenses 720 in the second region 720R.

Likewise, the plurality of third micro lenses 730 having the third average diameter AP3 in the third region 730R may have different diameters. According to the embodiment of the present invention, the plurality of third micro lenses 730 may have different diameters in a range of 0.95 to 1.05 times, preferably, 0.97 to 1.03 times, and more preferably, 0.98 to 1.02 times the third average diameter AP3. Accordingly, it is possible to minimize constructive interference and destructive interference due to overlapping of diffraction angles according to diffraction orders of the plurality of third micro lenses 730 in the third region 430R.

To this end, the diameters of the plurality of first micro lenses 710, the diameters of the plurality of second micro lenses 720, and the diameters of the plurality of third micro lenses 730 may each be designed by random number generation. When the diameters of the plurality of first micro lenses 710 are designed by random number generation, the plurality of first micro lenses 710 disposed in the first region 710R may have different diameters. When the diameters of the plurality of second micro lenses 720 are designed by random number generation, the plurality of second micro lenses 720 disposed in the second region 720R may have different diameters. When the diameters of the plurality of third micro lenses 730 are designed by random number generation, the plurality of third micro lenses 730 disposed in the third region 730R may have different diameters. When the plurality of micro lenses included in each region have different diameters, constructive interference and destructive interference due to the overlapping of diffraction angles according to the diffraction order can be minimized.

According to the embodiment of the present invention, the random number generation for the diameters of the micro lenses may be designed using a Gaussian function distribution according to a preset average diameter and standard deviation. According to the embodiment of the present invention, the diameters of the plurality of micro lenses included in each region may be extracted by a rejection sampling as many times as the number of the plurality of micro lenses included in each region.

Equation 10 represents a Gaussian function.

[Equation 10]

$$f_{gauss}(x) = \frac{1}{\sqrt{2\pi}\sigma} exp\left[-\frac{1}{2}\left(\frac{x-\mu}{\sigma}\right)^2\right]$$

where x denotes a variable, $\mu$ denotes the mean, and $\sigma$ denotes the standard deviation.

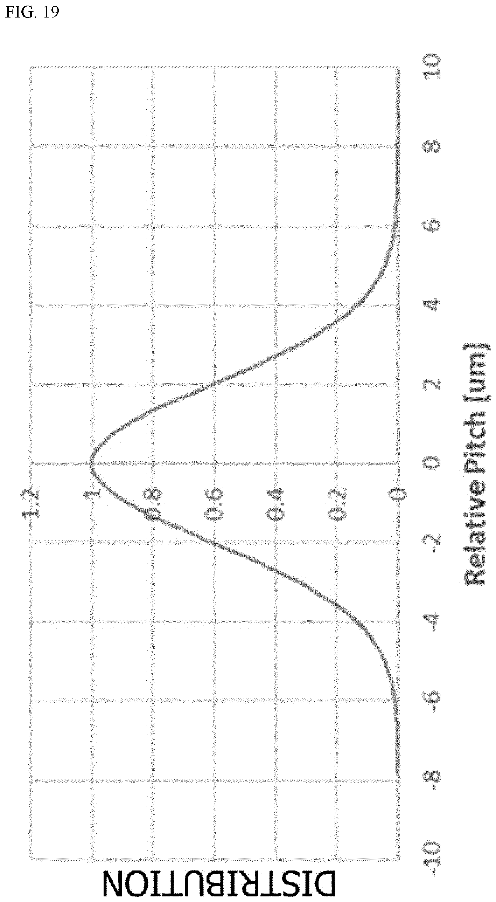

That is, when the average diameter and the standard deviation for each region are defined, the Gaussian function distribution may be set. FIG. 19 illustrates a Gaussian function distribution with an average diameter of 300 $\mu$m and a standard deviation of 2 $\mu$m.

Meanwhile, it may be difficult to directly extract a random number from a normal distribution illustrated in FIG. 19. Accordingly, in the embodiment of the present invention, the random number for the diameters of the plurality of micro lenses for each region may be extracted using the rejection sampling.

To this end, an envelope function for the Gaussian function of Equation 10 is defined. The envelope function has a similar form to the Gaussian function of Equation 10 and has a larger value than the Gaussian function of Equation 10 with respect to all values that may have variables. Equation 11 is an envelope function for the Gaussian function of Equation 10.

[Equation 11]

$$f_{env}(x) = \frac{1}{\sqrt{2\pi}}\left[\frac{\sigma}{\sigma^2 + (x-\mu)^2/2}\right]$$

where x denotes a variable, $\mu$ denotes the mean, and $\sigma$ denotes the standard deviation.

According to the embodiment of the present invention, the random number is extracted from Equation 11 that is the envelop function. Equation 12 is a function that generates a random number using a continuous uniform distribution from Equation 11, which is the envelop function.

[Equation 12]

$$RS_{env}(x) = N_{env} = \frac{1}{\sqrt{\pi}}\left[atan\left(\frac{x-\mu}{\sqrt{2}\sigma}\right) + \frac{\pi}{2}\right]$$

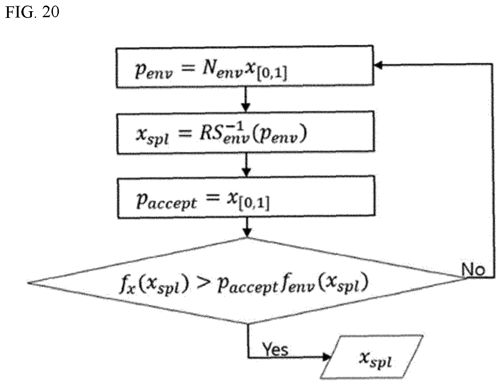

FIG. 20 is an example of a reject sampling procedure according to an embodiment of the present invention. According to the embodiment of the present invention, the Gaussian function of Equation 10 is compared with the envelop function of Equation 11 in the random number extracted from Equation 12, and it may be determined whether to accept or reject the random number according to the result of the comparison. When the Gaussian function of Equation 10 is compared with the envelop function of Equation 11, the farther away from the average value and the greater the difference is, and the closer to the average value and the smaller the difference is. Accordingly, it is advantageous to accept a random number close to the average value.

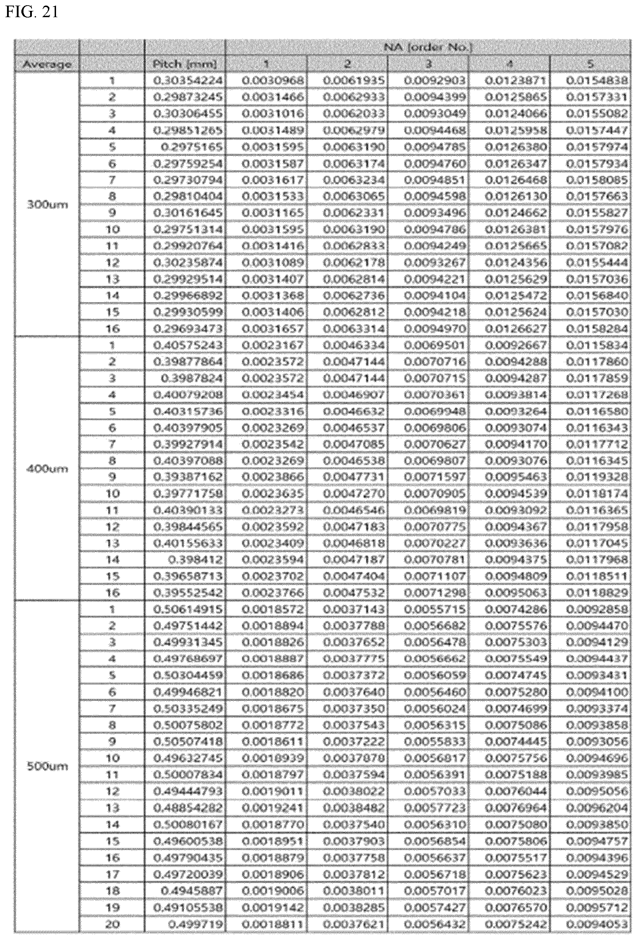

FIG. 21 illustrates diameters and diffraction angles for each diffraction order of micro lenses designed according to the embodiment of the present invention.

Referring to FIG. 21, the diameters of the plurality of first micro lenses 710 are the result designed according to the random number generation method according to the embodiment of the present invention by setting the first average diameter AP1 as 300 μm, setting the first standard deviation as 2.13, and setting the number of samples as 16. Accordingly, it can be seen that the diameters of the plurality of first micro lenses 710 are all different and there is no overlapping portion of the diffraction angles for each diffraction order.

The diameters of the plurality of second micro lenses 720 are the result designed according to the random number generation method according to the embodiment of the present invention by setting the second average diameter AP2 as 400 μm, setting the second standard deviation as 3.42, and setting the number of samples as 16. Accordingly, it can be seen that the diameters of the plurality of second micro lenses 720 are all different and there is no overlapping portion of the diffraction angles for each diffraction order.

The diameters of the plurality of third micro lenses 730 are the result designed according to the random number generation method according to the embodiment of the present invention by setting the third average diameter AP1 as 500 μm, setting the third standard deviation as 4.37, and setting the number of samples as 20. Accordingly, it can be seen that the diameters of the plurality of third micro lenses 730 are all different and there is no overlapping portion of the diffraction angles for each diffraction order.

In this way, since the diameters of the first to third micro lenses 710 to 730 are all different, the diffraction angles for each diffraction order do not overlap each other, and constructive interference and destructive interference due to the overlapping of diffraction angles according to the diffraction order can be minimized.

Meanwhile, according to the embodiment of the present invention, the number and average diameters of micro lenses included in at least one of the first to third regions 710R, 720R, and 730R is correlated with the average diameter of the micro lens included in another region surrounding at least one of the first to third regions 710R, 720R, and 730R. The number of region-specific micro lenses according to the embodiment of the present invention may be represented by Equation 13.

$$[\text{Equation 13}]$$

$$AP_n \times x_n = AP_{n+1} \times (x_n + 1)$$

where $AP_n$ denotes an average diameter of a micro lens disposed in an $n^{th}$ region, $AP_{n+1}$ denotes an average diameter of a micro lens disposed in an $(n+1)^{th}$ region, and $x_n$ denotes the number of micro lenses disposed in the first direction or the number of micro lenses disposed in the second direction in the $n^{th}$ region. $x_n$ does not refer to the number of all micro lenses included in the $n^{th}$ region. For example, $x_1$ may be four micro lenses disposed in the first direction or the second direction in the first region, $x_2$ may be five micro lenses disposed in the first direction or the second direction in the second region, and $x_3$ may be six micro lenses disposed in the first direction or the second direction in the third region. Here, both sides of Equation 13 may have a predetermined error range. For example, when calculated values of right and left sides of Equation 13 have an error range within ±3%, Equation 13 may be interpreted as being established.

Accordingly, the number of micro lenses included in the $n^{th}$ region may be correlated with the average diameter of the micro lenses included in the $n^{th}$ region and the average diameter of the micro lenses included in the $(n+1)^{th}$ region surrounding the $n^{th}$ region. The number and average diameter of micro lenses included in the $n^{th}$ region may be correlated with the average diameter of the micro lenses included in the $(n+1)^{th}$ region surrounding the $n^{th}$ region.

For example, the number of first micro lenses 710 included in the first region 710R may be correlated with the first average diameter AP1 of the first micro lens 710 included in the first region 710R and the second average diameter AP2 of the second micro lens 720 included in the second region 720R. The number of first micro lenses 710 included in the first region 710R and the first average diameter AP1 may be correlated with the second average diameter AP2 of the second micro lens 720 included in the second region 720R. In addition, the number of second micro lenses 720 included in the second region 720R may be correlated with the second average diameter AP2 of the second micro lens 720 included in the second region 720R and the third average diameter AP3 of the third micro lens 730 included in the third region 730R. The number of second micro lenses 720 included in the second region 720R and the second average diameter AP2 may be correlated with the third average diameter AP3 of the third micro lens 730 included in the third region 730R.

For example, a product of the first average diameter AP1 and the number of first micro lenses 710 disposed in the first direction may be equal to a product of the second average diameter AP2 and a number that is one less than the number of first micro lenses 710 disposed in the first direction, and a product of the second average diameter AP2 and the number of second micro lenses 720 disposed in the first direction may be equal to a product of the third average diameter AP3 and a number that is one less than the number of second micro lenses 720 disposed in the first direction. Accordingly, constructive interference and destructive interference due to overlapping of diffraction angles according to a diffraction order for each region can be minimized, and the arrangement of the micro lens array is easy.

Table 4 is an example of the micro lens array according to the embodiment of the present invention under the condition that the distance D from the light source 110 to the diffusion member 700 is more than 5.7 mm (D>5.7 mm).

Table 4

| N | Average diameter | Number |
|---|---|---|
| 1 | 300 $\mu$m | 4 |
| 2 | 400 $\mu$m | 5 |
| 3 | 500 $\mu$m | 6 |
| 4 | 600 $\mu$m | 7 |
| 5 | 700 $\mu$m | 8 |
| 6 | 800 $\mu$m | 9 |

where N denotes the order of the regions, diameter is the diameter of the region-specific micro lens, and number is the number of micro lenses repeatedly disposed in the first direction or the number of micro lenses repeatedly disposed in the second direction.

For example, four micro lenses having an average diameter of 300 $\mu$m may be arranged in a row in the first direction in the first region, five micro lenses having an average of 400 $\mu$m may be disposed in a row in the first direction in the second region, six micro lenses having an average of 500 $\mu$m may be disposed in a row in the first direction in the third region, seven micro lenses having an average of 600 $\mu$m may be disposed in a row in the first direction in the fourth region, eight micro lenses having an average of 700 $\mu$m may be disposed in a row in the first direction in the fifth region, and nine micro lenses having an average of 800 $\mu$m may be disposed in a row in the first direction in the sixth region.

Referring to Equation 12, when the average diameter is 300 $\mu$m when n=1 and 400 $\mu$m when n=2, the number of micro lenses disposed in a row in the first direction at n=1 may be 4. Likewise, when the average diameter is 400 $\mu$m when n=2 and 500 $\mu$m when n=3, the number of micro lenses disposed in a row in the first direction at n=2 may be 5.

In addition, when the average diameter is 800 $\mu$m when n=6 and 900 $\mu$m when n=7, the number of micro lenses disposed in a row in the first direction at n=6 may be 9.

When the micro lens array is arranged according to these conditions, constructive interference and destructive interference due to overlapping of diffraction angles according to the diffraction order for each region can be minimized, and since three or more types of micro lenses having different average diameters are disposed in the effective optical region, the arrangement of the micro lens array can be safer for the user's eyes.

Table 5 is an example of the micro lens array according to the embodiment of the present invention under the condition that the distance D from the light source 110 to the diffusion member 700 is more than 1.2 mm (D>1.2 mm).

Table 5

| N | Average diameter | Number |
|---|---|---|
| 1 | 50 $\mu$m | 6 |
| 2 | 60 $\mu$m | 7 |
| 3 | 70 $\mu$m | 8 |
| 4 | 80 $\mu$m | 9 |
| 5 | 90 $\mu$m | 10 |
| 6 | 100 $\mu$m | 11 |
| 7 | 110 $\mu$m | 12 |
| 8 | 120 $\mu$m | 13 |

where N denotes the order of the regions, diameter is the diameter of the region-specific micro lens, and number is the number of micro lenses repeatedly disposed in the first direction or the number of micro lenses repeatedly disposed in the second direction.

It can be seen that the micro lens array is also designed to satisfy Equation 12 in Table 5. When the micro lens array is arranged according to these conditions, constructive interference and destructive interference due to overlapping of diffraction angles according to the diffraction order for each region can be minimized, and since three or more types of micro lenses having different average diameters are disposed in the effective optical region, the arrangement of the micro lens array can be safer for the user's eyes.

Table 6 is an example of the micro lens array according to the embodiment of the present invention under the condition that the distance D from the light source 110 to the diffusion member 700 is more than 0.35 mm (D>0.35 mm).

Table 6

| N | Average diameter | Number |
|---|---|---|
| 1 | 20 μm | 3 |
| 2 | 30 μm | 4 |
| 3 | 40 μm | 5 |
| 4 | 50 μm | 6 |
| 5 | 60 μm | 7 |
| 6 | 70 μm | 8 |

where N denotes the order of the regions, diameter is the diameter of the region-specific micro lens, and number is the number of micro lenses repeatedly disposed in the first direction or the number of micro lenses repeatedly disposed in the second direction.

It can be seen that the micro lens array is also designed to satisfy Equation 12 in Table 6. When the micro lens array is arranged according to these conditions, constructive interference and destructive interference due to overlapping of diffraction angles according to the diffraction order for each region can be minimized, and since three or more types of micro lenses having different average diameters are disposed in the effective optical region, the arrangement of the micro lens array can be safer for the user's eyes.

Referring to Tables 4 to 6, it can be seen that the average diameter of the micro lens varies depending on the distance D between the light source 110 and the diffusion member 700. Here, the distance D between the light source 110 and the diffusion member 700 may be the vertical distance between the first surface of the light source 110 and the first surface of the diffusion member 700. The first surface of the light source 110 is one surface on which the apertures are disposed. The first surface of the diffusion member 700 is one surface on which light is received by each of the plurality of micro lenses 710, 720, and 730 from the light source 110. Specifically, since the plurality of micro lenses 710, 720, and 730 are disposed in an embossing form on the first surface of the diffusion member 700, the first surface of the diffusion member 700 may be one surface that connects points through which the optical axis passes through each of the plurality of micro lenses 710, 720, and 730. Therefore, the distance between the diffusion member 700 and the light source 110 may be the vertical distance between one point through which the optical axes of the micro lenses 710, 720, and 730 pass and the first surface of the light source 110.

It can be seen that as shown in Table 4, when D>5.7 mm, the average diameter of the micro lens is hundreds of μm, for example, 300 μm or more, for example, ranges from 300 μm to 800 μm, and as shown in Table 5, when D>1.2 mm, the average diameter of the micro lens is tens of μm to hundreds of μm, for example, 50 μm or more, for example, ranges from 50 μm to 120 μm, and as shown in Table 6, when D>0.35 mm, the average diameter of the micro lens is tens of μm, for example, 20 μm or more, for example, ranges from 20 μm to 70 μm. In this way, when the average diameter of the micro lens varies depending on the distance D between the light source 110 and the diffusion member 700, the light flux concentration on a specific micro lens can be reduced, thereby making the user's eyes safe.

Meanwhile, according to the embodiment of the present invention, the plurality of first micro lenses 710 included in the first region 710R, the plurality of second micro lenses 720 included in the second region 720R, and the plurality of third micro lenses 730 included in the third region 730R may protrude in a direction toward the light source 110. In the present specification, the direction from the diffusion member 700 to the light source 110 may be referred to as a third direction perpendicular to the first direction and the second direction, which are plane directions of the diffusion member 700. Here, the third direction may be the same as the optical axes direction of the first to third micro lenses 710, 720, and 730.

In this case, first average protrusion heights h1 of the plurality of first micro lenses 710, second average protrusion heights h2 of the plurality of second micro lenses 720, and third average protrusion heights h3 of the plurality of third micro lenses 730 may be different. Here, the first average protrusion heights h1, the second average protrusion heights h2, and the third average protrusion heights h3 may be interchangeably used with the first average diameter AP1, the second average diameter AP2, and the third average diameter AP3, respectively. Accordingly, since boundaries of the first region 710R, the second region 720R, and the third region 730R are determined by the protrusion height of each micro lens, the periodicity of the grating is broken, and constructive interference and destructive interference due to the overlapping of diffraction angles according to the diffraction order of each region can be minimized. According to the embodiment of the present invention, the plurality of first micro lenses 710 may all have different protrusion heights, the plurality of second micro lenses 720 may all have different protrusion heights, and the plurality of third micro lenses 730 may all have different protrusion heights.

In this case, the plurality of first micro lenses 710 included in the first region 710R, the plurality of second micro lenses 720 included in the second region 720R, and the plurality of third micro lenses 730 included in the third region 730R may each have an aspherical shape. For example, the aspherical shapes of the first micro lens 710, the second micro lens 720, and the third micro lens 730 may be defined by an image height, a radius of curvature, and a conic constant. For example, the aspherical shapes of the first micro lens 710, the second micro lens 720, and the third micro lens 730 may be defined by Equation 14.

[Equation 14]

$$Z = \frac{\frac{h^2}{R}}{1 + \sqrt{1 - (1+K)\left(\frac{h}{R}\right)^2}}$$

where Z denotes the aspherical shape of the lens, h denotes the image height, R denotes the radius of curvature, and K denotes the conic constant.

Since the micro lens array is arranged in a two dimension manner, the aspherical shapes of the first micro lens 710, the second micro lens 720, and the third micro lens 730 may be defined by Equation 15.

[Equation 15]

$$Z = \frac{\frac{x^2}{R_x} + \frac{y^2}{R_y}}{1 + \sqrt{1 - (1+K_x)\left(\frac{x}{R_x}\right)^2 - (1+K_y)\left(\frac{y}{R_y}\right)^2}}$$

where x denotes an X-axis image height, y denotes a Y-axis image height, $R_x$ denotes an X-axis curvature radius, $R_y$ denotes a Y-axis curvature radius, $K_x$ denotes an X-axis conic constant, and $K_y$ denotes a Y-axis conic constant.

Accordingly, the FoI of the laser beam passing through the micro lens array may be defined, and the light flux concentration on the specific micro lens may be set so as not to exceed a predetermined value.

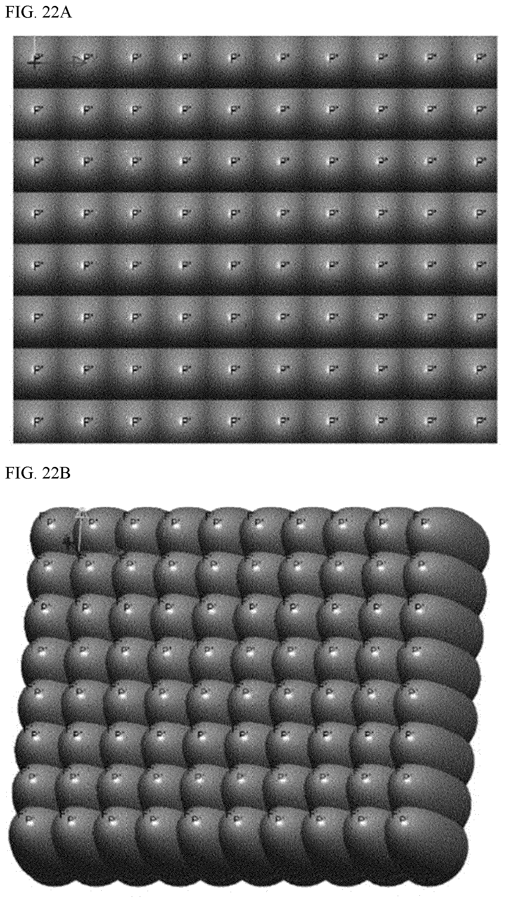

Meanwhile, FIG. 22A is a plan view of a three-dimensional drawing of a micro lens array having a uniform diameter, and FIG. 22B is a perspective view of the three-dimensional drawing of the micro lens array having the uniform diameter. As described above, the micro lens array having the uniform diameter has a sharp edge angle formed on the peripheral portion, and strong constructive interference due to diffraction occurs.

According to still another embodiment of the present invention, the diffusion member includes a plurality of micro lenses having different diameters and different FoIs. Hereinafter, for the sake of convenience of description, overlapping description for the same contents as those described with reference to FIGS. 1 to 21 will be omitted.

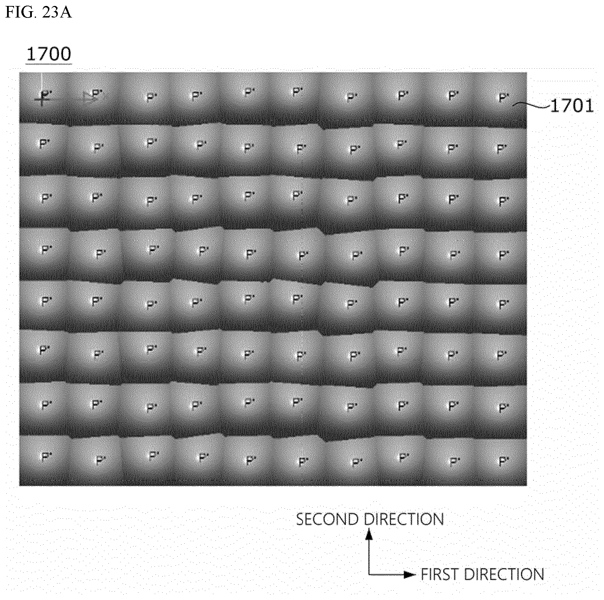

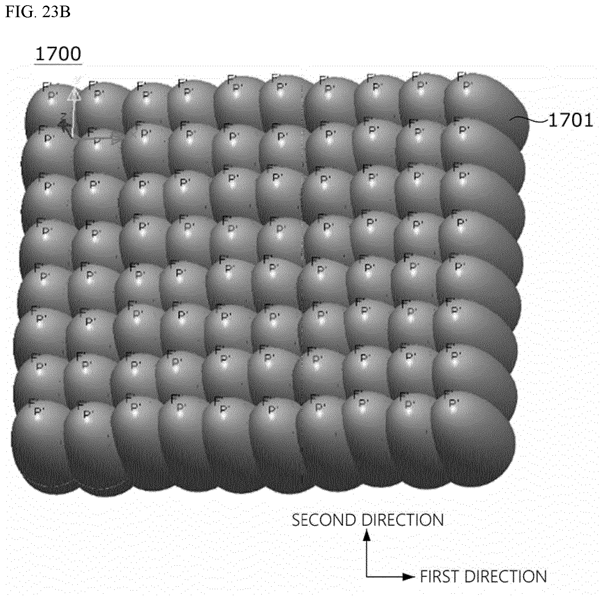

FIG. 23A is a plan view of a three-dimensional drawing of a micro lens array according to still another embodiment of the present invention, and FIG. 23B is a perspective view of the three-dimensional drawing of the micro lens array according to still another embodiment.

Referring to FIGS. 23A and 23B, a micro lens array 1700 according to yet another embodiment of the present invention includes a plurality of micro lenses 1701.

According to the embodiment of the present invention, 50% or more, preferably, 60% or more, and more preferably, 70% or more of the plurality of micro lenses 1701 have different diameters. Here, the plurality of micro lenses 1701 are disposed in a two-dimensional manner in the first direction and the second direction perpendicular to the first direction. Here, the first direction may be referred to as an X direction, and the second direction may be referred to as a Y direction. Accordingly, 50% or more, preferably, 60% or more, and more preferably, 70% or more of the plurality of micro lenses 1701 may have different diameters in the first direction. Alternatively, 50% or more, preferably, 60% or more, and more preferably, 70% or more of the plurality of micro lenses 1701 may have different diameters in the second direction.

According to the embodiment of the present invention, 50% or more, preferably, 60% or more, and more preferably, 70% or more of the plurality of micro lenses 1701 have different FoIs. Here, the FoI is defined by the aspherical shape, the radius of curvature, and the conic constant of each micro lens. Accordingly, at least 50%, preferably, at least 60%, and more preferably, 70% or more of the plurality of micro lenses 1701 may have different aspherical shapes, radii of curvature, and conic constants. Here, the plurality of micro lenses are disposed in a two dimension manner in the first direction and the second direction. Accordingly, 50% or more, preferably, 60% or more, and more preferably, 70% or more of the plurality of micro lenses may have different FoIs in the first direction. Alternatively, 50% or more, preferably, 60% or more, and more preferably, 70% or more of the plurality of micro lenses may have different FoIs in the second direction. That is, 50% or more, preferably, 60% or more, and more preferably, 70% or more of the plurality of micro lenses may have at least one of different aspherical shapes, radii of curvature, and conic constants in the first direction. Alternatively, 50% or more, preferably, 60% or more, and more preferably, 70% or more of the plurality of micro lenses may have at least one of different aspherical shapes, radii of curvature, and conic constants in the second direction.

In this way, when 50% or more, preferably, 60% or more, and more preferably, 70% or more of the plurality of micro lenses have different diameters and/or different FoIs, the diffraction phenomenon due to interference is minimized, the homogeneity of the surface illumination pattern is increased, and it makes the user's eyes safer.

According to the embodiment of the present invention, the plurality of micro lenses having different diameters and/or different FoIs are disposed in region a defined by Equation 16.

$$[\text{Equation 16}]$$

$$\alpha = 2D\tan\theta$$

where a denotes a width of a region in which $1/e^2$ times the maximum intensity of light reaches, D denotes a distance from the light source 110 to the diffusion member 1700, and $\theta$ may be defined as an angle at which $1/e^2$ times the maximum intensity of light of the light source 110 is output.

In this regard, referring to FIG. 3, the light source 110 and the micro lens array 120 are disposed to be spaced a predetermined distance D from each other. In addition, the light-emitting element 112 outputs light at a predetermined angle $\theta$. When a virtual normal line perpendicular to the substrate 111 is drawn from the center of the light-emitting element 112, an angle $\theta/2$ formed by the virtual normal line and the light is half of the divergence angle $\theta$ of light output by the light-emitting element 112. The plurality of light-emitting elements 112 may all have the same specifications, and the divergence angles $\theta$ at which the plurality of light-emitting elements 112 output light may be the same.

For example, the light-emitting element 112 may emit a predetermined amount of energy from -20 degrees to 20 degrees with respect to the optical axis. However, it can be seen that the amount of energy is close to zero at an angle of -15 degrees, +15 degrees, -15 degrees or less, or 15 degrees or more. That is, most of the energy is present in a predetermined angle with respect to the optical axis of the light-emitting element. Accordingly, it is inefficient to set all angles at which the amount of energy is not zero as the divergence angle of the light-emitting element, and it is efficient to set an angle at which a predetermined amount of energy or more is emitted as the divergence angle of the light-emitting element. Accordingly, the divergence angle of the light source 110 may be set as an angle at which $1/e^2$ times the maximum intensity of light of the light source 110 is output, and the region a defined by Equation 16 may be referred to as an effective light region.

Here, the difference diameters of the plurality of micro lenses may be designed by random number generation. According to the embodiment of the present invention, the random number generation for the diameters of the micro lenses may be designed using a Gaussian function distribution according to a preset average diameter and standard deviation. According to the embodiment of the present invention, the diameter of the micro lens may be extracted by reject sampling as many times as the number of micro lenses.

Likewise, the different FoIs of the plurality of micro lenses may be designed by random number generation. According to the embodiment of the present invention, the random number generation for the FoIs of the micro lenses may be designed using a Gaussian function distribution according to a preset average FoI and standard deviation. According to the embodiment of the present invention, the FoI of the micro lens may be extracted by the reject sampling as many times as the number of micro lenses.

Equation 17 represents a Gaussian function.

[Equation 17]

$$f_{gauss}(x) = \frac{1}{\sqrt{2\pi}\sigma} exp\left[-\frac{1}{2}\left(\frac{x-\mu}{\sigma}\right)^2\right]$$

where x denotes a variable, $\mu$ denotes the mean, and $\sigma$ denotes the standard deviation.

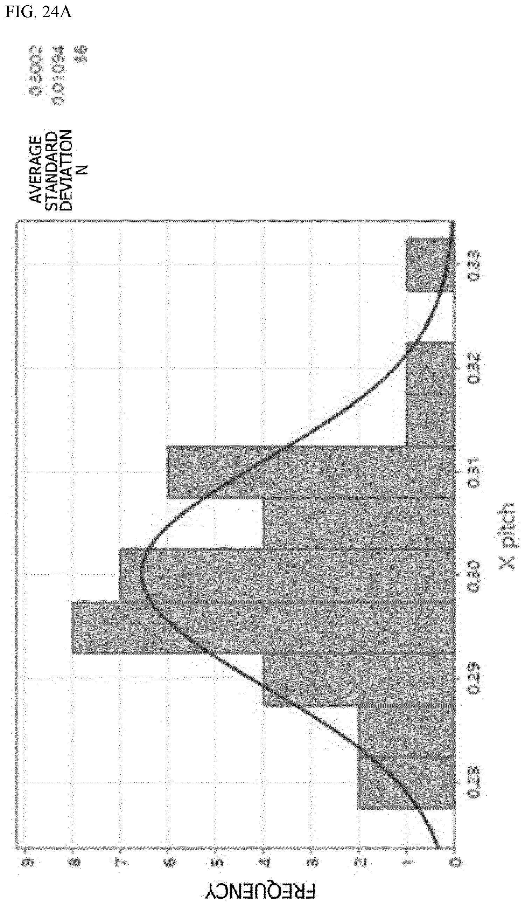

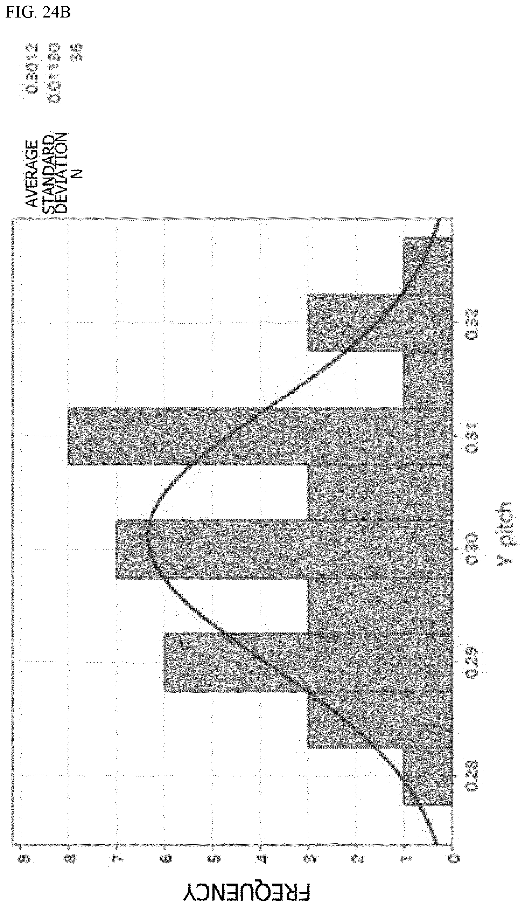

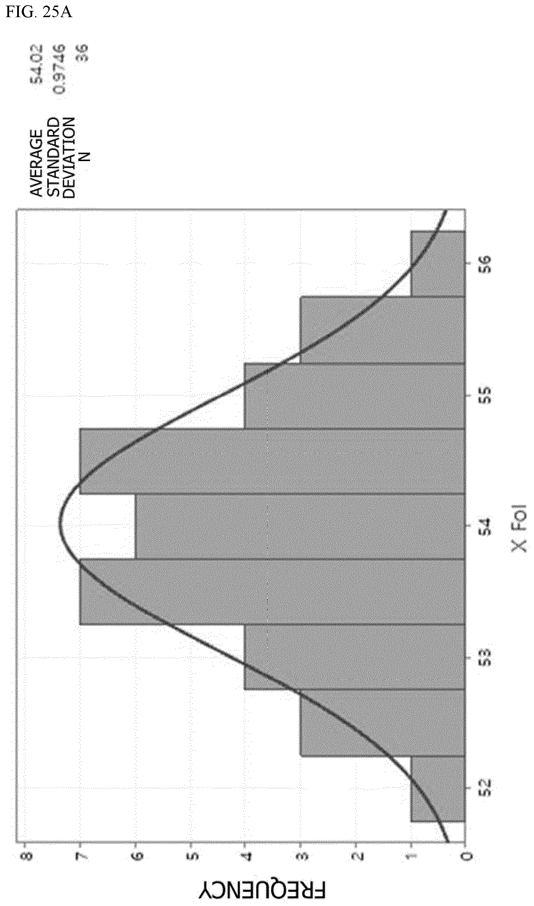

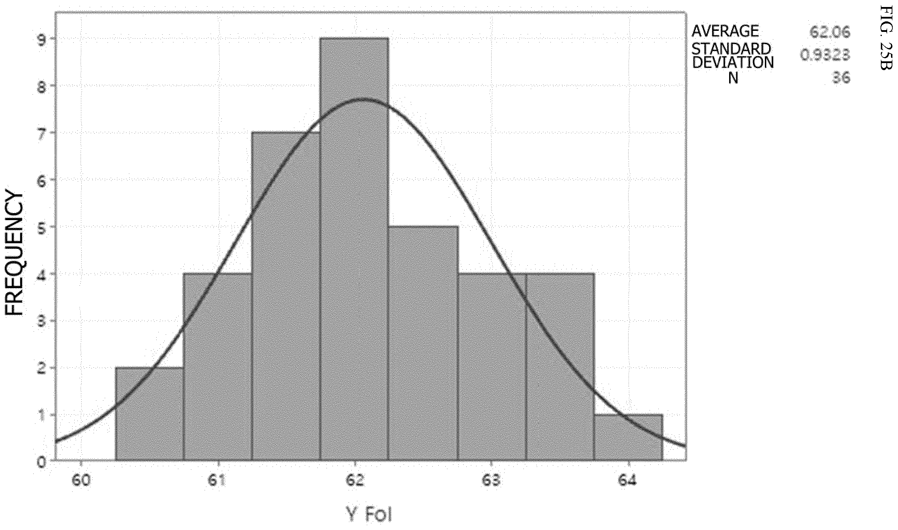

FIG. 24A illustrates a Gaussian function distribution with an average diameter of 300.2 $\mu$m in an X direction and a standard deviation of 10.94 $\mu$m, FIG. 24B illustrates a Gaussian function distribution with an average diameter of 301.2 $\mu$m in a Y direction and a standard deviation of 11.3 $\mu$m, FIG. 25A illustrates a Gaussian function distribution set as an average field of illumination (FoI) of 54.02 degrees in the X direction and a standard deviation of 0.9746 degrees, and FIG. 25B illustrates a Gaussian function distribution set as an average FoI of 62.06 degrees in the Y direction and a standard deviation of 0.9323 degrees.

Meanwhile, it may be difficult to directly extract random numbers from a normal distribution illustrated in FIGS. 24A to FIG. 25B. Accordingly, in the embodiment of the present invention, random numbers for the diameters and/or FoIs of the plurality of micro lenses may be extracted using the rejection sampling.

To this end, an envelope function for the Gaussian function of Equation 17 is defined. The envelope function has a similar form to the Gaussian function of Equation 17 and has a larger value than the Gaussian function of Equation 17 with respect to all values that may have variables. Equation 18 is an envelope function for the Gaussian function of Equation 17.

[Equation 18]

$$f_{env}(x) = \frac{1}{\sqrt{2\pi}}\left[\frac{\sigma}{\sigma^2 + \frac{(x-\mu)^2}{2}}\right]$$

where x denotes a variable, $\mu$ denotes the mean, and $\sigma$ denotes the standard deviation.

According to the embodiment of the present invention, the random number is extracted from Equation 18 that is the envelop function. Equation 19 is a function that generates a random number using a continuous uniform distribution from Equation 18, which is the envelop function.

[Equation 19]

$$RS_{env}(x) = N_{env} = \frac{1}{\sqrt{\pi}}\left[atan\left(\frac{x-\mu}{\sqrt{2}\sigma}\right) + \frac{\pi}{2}\right]$$

A reject sampling procedure according to the embodiment of the present invention may be referred by FIG. 20. According to the embodiment of the present invention, the Gaussian function of Equation 17 is compared with the envelop function of Equation 18 in the random number extracted from Equation 19, and it may be determined whether to accept or reject the random number according to the result of the comparison. When the Gaussian function of Equation 17 is compared with the envelop function of Equation 18, the farther away from the average value and the greater the difference is, and the closer to the average value and the smaller the difference is. Accordingly, it is advantageous to accept a random number close to the average value.

Meanwhile, each micro lens included in the plurality of micro lenses may have an aspherical shape. The aspherical shape of each micro lens may be defined by the image height, the radius of curvature, and the conic constant. For example, the aspherical shape of each micro lens may be defined by Equation 20.

[Equation 20]

$$Z = \dfrac{\dfrac{h^2}{R}}{1 + \sqrt{1 - (1 + K)\left(\dfrac{h}{R}\right)^2}}$$

where Z denotes the aspherical shape of the lens, h denotes the image height, R denotes the radius of curvature, and K denotes the conic constant.

Since the micro lens array is arranged in a two dimension manner, the aspherical shape of each micro lens may be defined by Equation 21.

[Equation 21]

$$z = \dfrac{\dfrac{x^2}{R_x} + \dfrac{y^2}{R_y}}{1 + \sqrt{1 - (1 + K_x)\left(\dfrac{x}{R_x}\right)^2 - (1 + K_y)\left(\dfrac{y}{R_y}\right)^2}}$$

where x denotes an X-axis image height, y denotes a Y-axis image height, $R_x$ denotes an X-axis curvature radius, $R_y$ denotes a Y-axis curvature radius, $K_x$ denotes an X-axis conic constant, and $K_y$ denotes a Y-axis conic constant.

The FoI of the laser beam that has passed through the micro lens may be defined by the aspherical shape. Accordingly, in the embodiment of the present invention, to design a plurality of micro lenses having different FoIs, a random number for at least one of the aspherical shape, the radius of curvature, and the conic constant of the micro lens may be generated. For example, the random number for at least one of the aspherical shape, the radius of curvature, and the conic constant of the micro lens may be generated using a Gaussian function distribution according to a preset mean value and standard deviation and may be extracted by the rejection samplings as many time as the number of micro lenses. The random number for at least one of the aspherical shape, the radius of curvature, and the conic constant of the micro lens may be designed by the rejection sampling described with reference to Equations 17 to 20 and FIG. 20.

Accordingly, in the micro lens assembly 1700 according to the embodiment of the present invention, at least one of the aspherical shape, the radius of curvature, and the conic constant of each of 50% or more, preferably, 60% or more, and more preferably, 70% or more of the plurality of micro lenses may be different. Since the micro lens assembly 1700 is arranged in a two-dimensional manner, at least one of the aspherical shape, the radius of curvature, and the conic constant of each of 50% or more, preferably, 60% or more, and more preferably, 70% or more of the plurality of micro lenses may be different in the first direction, or at least one of the aspherical shape, the radius of curvature thereof may be different in the second direction. In this case, at least one of the radius of curvature and the conic constant of each of at least some of the plurality of micro lenses having the same radius of curvature and the conic constant in the first direction may be different in the second direction, or at least one of the radius of curvature and the conic constant of each of at least some of the plurality of micro lenses having the same radius of curvature and the conic constant in the second direction may be different in the first direction.

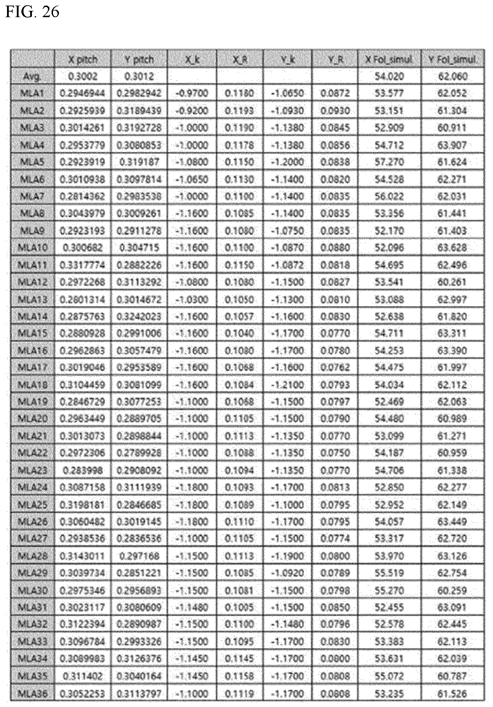

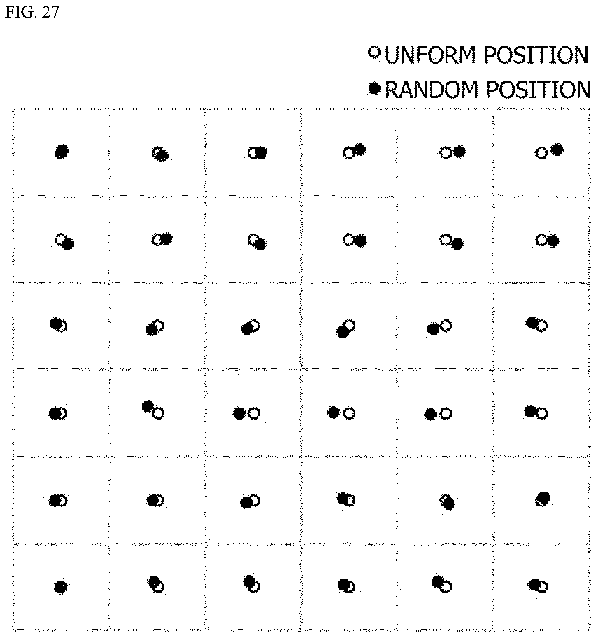

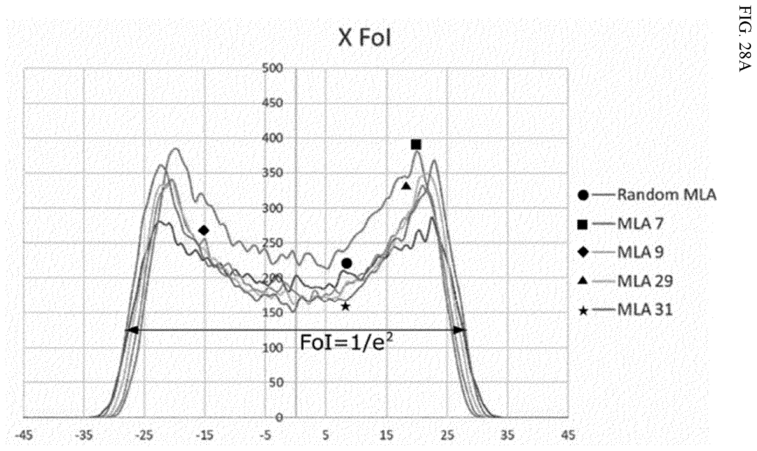

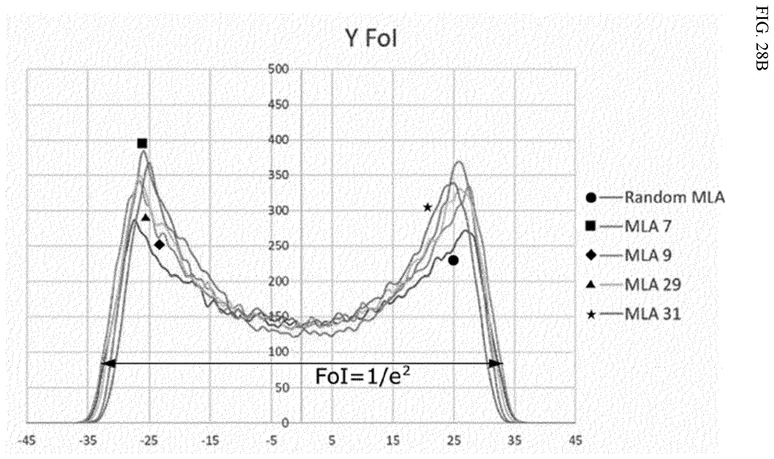

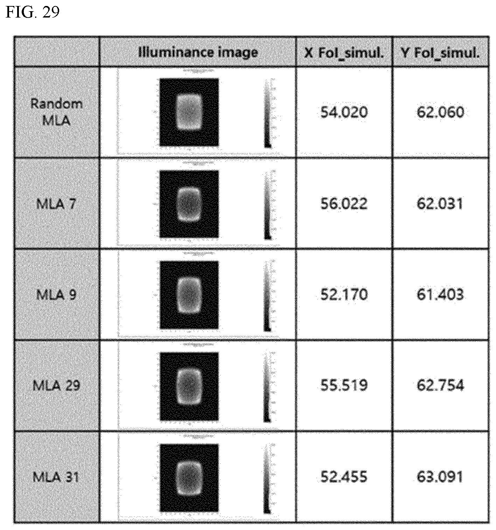

FIG. 26 illustrates diameters and FoIs of the micro lenses designed according to the embodiment of the present invention, FIG. 27 illustrates a position of a center of the micro lens array according to the design of FIG. 26, FIG. 28A is an FoI graph in the X direction according to the design of FIG. 26, FIG. 28B is an FoI graph in the Y direction according to the design of FIG. 26, and FIG. 29 is a light emitting image according to the design of FIG. 29.

Referring to FIG. 26, X pitch denotes an X-direction diameter, Y pitch denotes a Y-direction diameter, X_k denotes an X-direction conic constant, X_R denotes an X-direction radius of curvature, Y_k denotes a Y-direction conic constant, Y_R denotes a Y-direction radius of curvature, X FoI_simul. denotes an X-direction FoI, and Y FoI_simul. denotes a Y-direction FoI. The diameter and FoI of the micro lens are the result designed according to the random number generation method according to the embodiment of the present invention by setting the average diameter of the plurality of micro lenses in the X direction as 300.2 $\mu$m, setting the standard deviation as 10.94 $\mu$m, setting the average diameter in the Y direction as 301.2 $\mu$m, setting the standard deviation as 11.3 $\mu$m, setting the average FoI in the X direction as 54.02 degrees, setting the standard deviation as 0.9746 degrees, setting the average FoI in the Y direction as 62.06 degrees, setting the standard deviation as 0.9323 degrees, and setting the number of samples as 36. Accordingly, it can be seen that diameters of 36 micro lenses are all different and the FoIs are all different.

Referring to FIG. 27, a uniform position in a grid of a 6*6 matrix is a center position of each grid, and a random position is a center position of the plurality of micro lenses generated according to the design of FIG. 26. Accordingly, it can be seen that the center position of the plurality of micro lenses generated according to the design of FIG. 26 are randomly arranged.

Referring to FIGS. 28A and 28B, it can be seen that each micro lens, such as MLA 7, MLA 9, MLA 29, and MLA 31, has its own FoI, but the Random MLA, which is the overall FoI of MLA1 to MLA36, converges to a pre-designed average FoI.

Referring to FIG. 29, it can be seen that the micro lens array including MLA 1 to MLA 36 is more effective in suppressing diffraction phenomena and homogenizing the surface illumination pattern than the micro lens array including 36 MLA 7s, the micro lens array including 36 MLA 9s, the micro lens array including 36 MLA 29s, and the micro lens array including 36 MLA 31s.

Referring back to FIGS. 23A and 23B, the diffusion member 1700 according to the embodiment of the present invention includes a micro lens array, the micro lens array includes a plurality of micro lenses, and 50% or more of the micro lens array are micro lenses having different FoIs.

In this case, the micro lens array includes a plurality of micro lenses disposed in an N*M matrix. Here, N and M is each an integer greater than or equal to 3 and may be the same or different. According to the embodiment of the present invention, the plurality of micro lenses disposed in at least a 3*3 matrix have different FoIs. As described above, since the FoI is defined by the aspherical shape, the radius of curvature, and the conic constant, at least one of the aspherical shape, the radius of curvature, and the conic constant of each of the plurality of micro lenses disposed in the 3*3 matrix may be different.

According to the embodiment of the present invention, 50% or more, preferably, 60% or more, and more preferably, 70% or more of the plurality of micro lenses having different diameters and/or different FoIs may be distributed and dispersed between a plurality of other micro lenses having the same diameter and/or the same FoI. Alternatively, 50% or more, preferably, 60% or more, and more preferably, 70% or more of the plurality of micro lenses having different diameters and/or different FoIs may be disposed adjacent to each other between the plurality of other micro lenses having the same diameter and/or the same FoI.

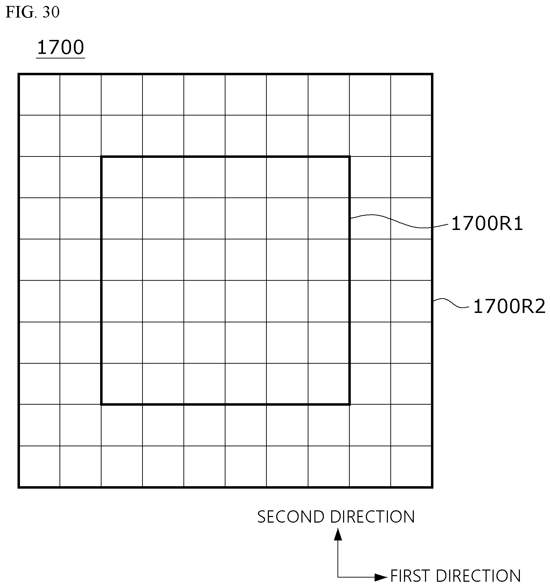

FIG. 30 is a plan view of a micro lens array according to yet another embodiment of the present invention. For the sake of convenience of description, overlapping description for the same contents as those described with reference to FIGS. 1 to 29 will be omitted.

Referring to FIG. 30, the micro lens array 1700 according to another embodiment of the present invention may be partitioned into a first region 1700R1 including the center of the micro lens array 1700 and a second region 1700R2 surrounding the first region 1700R1 and including an edge of the micro lens array 1700.

The first region 1700R1 includes a plurality of micro lenses in at least a 3*3 matrix, and the plurality of micro lenses included in the first region 1700R1 may have different FoIs. In this case, the different FoIs of the plurality of micro lenses included in the first region 1700R1 may range from 0.9 to 1.1 times the average FoI. In this case, the different FoIs may be designed by random number generation with reference to the description of Equations 17 to 19 and FIG. 20. The plurality of micro lenses included in the first region 1700R1 may have different FoIs in the first direction or different FoIs in the second direction. That is, the plurality of micro lenses included in the first region 1700R1 may have at least one of different aspherical shapes, radii of curvature, and conic constants in the first direction or at least one of different aspherical shapes, radii of curvature, and conic constants in the second direction.

In this case, an area of the first region 1700R1 may range from 50% to 70%, preferably, from 55% to 65%, of the total area of the micro lens array 1700. The first region 1700R1 is disposed in the region a defined with reference to the description of Equation 16 and FIG. 3.

In addition, the second region 1700R2 includes a plurality of micro lenses, and the plurality of micro lenses included in the second region 1700R2 may have the same FoI.

Accordingly, a light signal that has passed through the micro lens array 1700 may be diffused and reach a target region including an object. Accordingly, the diffraction phenomenon due to interference can be reduced in main parts of the target region including the object, a light signal with a homogeneous surface pattern may reach, and the complexity of the design of the micro lens array 1700 can be reduced.

Here, the plurality of micro lenses included in the first region 1700R1 may have different diameters. In this case, the different diameters of the plurality of micro lenses included in the first region 1700R1 may be designed by random number generation with reference to the description of Equations 17 to 19 and FIG. 20. Accordingly, the diffraction phenomenon due to interference can be reduced, and a homogeneous surface pattern can be implemented.

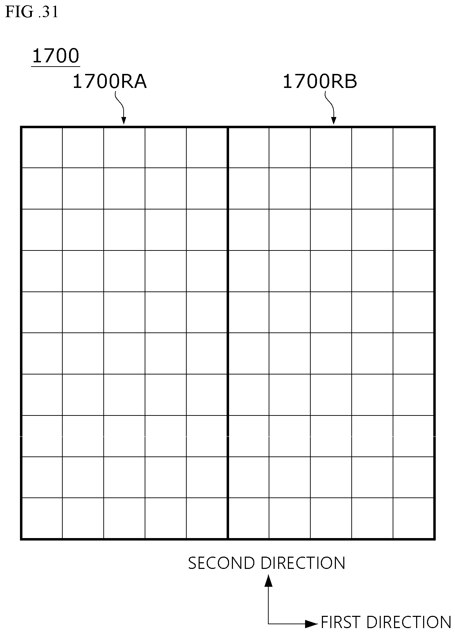

FIG. 31 is a plan view of a micro lens array according to yet another embodiment of the present invention. For the sake of convenience of description, overlapping description for the same contents as those described with reference to FIGS. 1 to 30 will be omitted.

Referring to FIG. 31, the micro lens array (1700) according to still another embodiment of the present invention includes a first region 1700RA and a second region 1700RB disposed on a side surface of the first region 1700RA.

The first region 1700RA and the second region 1700RB each include a plurality of micro lenses, the plurality of micro lenses included in the first region 1700RA may have different FoIs, and the plurality of micro lenses included in the second region 1700RB may have different FoIs. In this case, the different FoIs may be designed by random number generation with reference to the description of Equations 17 to 19 and FIG. 20. The plurality of micro lenses included in the first region 1700RA may have different FoIs in the first direction or different FoIs in the second direction. That is, the plurality of micro lenses included in the first region 1700RA may have at least one of different aspherical shapes, radii of curvature, and conic constants in the first direction or at least one of different aspherical shapes, radii of curvature, and conic constants in the second direction. The plurality of micro lenses included in the second region 1700RB may have different FoIs in the first direction or different FoIs in the second direction. That is, the plurality of micro lenses included in the first region 1700RB may have at least one of different aspherical shapes, radii of curvature, and conic constants in the first direction or at least one of different aspherical shapes, radii of curvature, and conic constants in the second direction.

In this case, the average FoI of the plurality of micro lenses included in the first region 1700RA and the average FoI of the plurality of micro lenses included in the second region 1700RB may be the same. Here, the same average FoI may include an error range of $\pm5\%$.

According to the embodiment of the present invention, the light source 110 may be a VCSEL, and the VCSEL may be partitioned and driven. For example, the light source 110 may be partitioned into a first VCSEL region and a second VCSEL region, and the first VCSEL region may be driven during a first time region, and the second VCSEL region may be driven during a second time region. The average FoI of the plurality of micro lenses included in the first region 1700RA of the micro lens array 1700 and the average FoI of the plurality of micro lenses included in the second region 1700RB may be the same, the first region 1700RA of the micro lens array 1700 may be disposed at a position corresponding to the first VCSEL region, and the second region 1700RB of the micro lens array 1700 may be disposed at a position corresponding to the second VCSEL region. Accordingly, the diffraction phenomenon due to interference during the entire time region can be reduced, and a homogeneous surface pattern can be implemented.

Here, the plurality of micro lenses included in the first region 1700RA may have different diameters. In this case, the different diameters of the plurality of micro lenses included in the first region 1700RA may be designed by random number generation with reference to the description of Equations 17 to 19 and FIG. 20. In addition, the plurality of micro lenses included in the second region 1700RB may have different diameters. In this case, the different diameters of the plurality of micro lenses included in the second region 1700RB may be designed by random number generation with reference to the description of Equations 17 to 19 and FIG. 20. Accordingly, the diffraction phenomenon due to interference can be reduced, and a homogeneous surface pattern can be implemented.

According to yet another embodiment of the present invention, the micro lens array may be partitioned into a plurality of regions and may include micro lenses having different average diameters for each region.

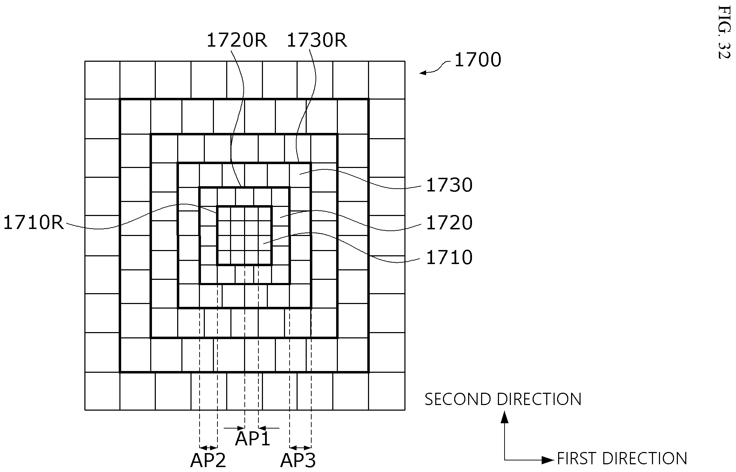

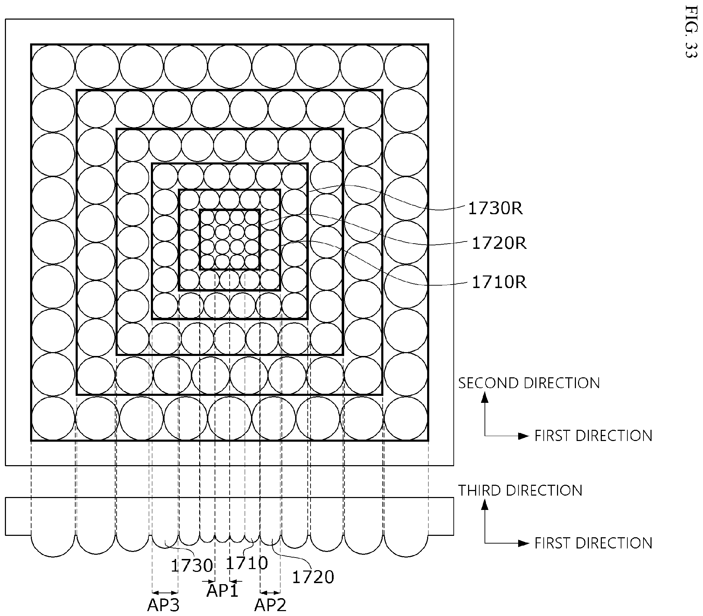

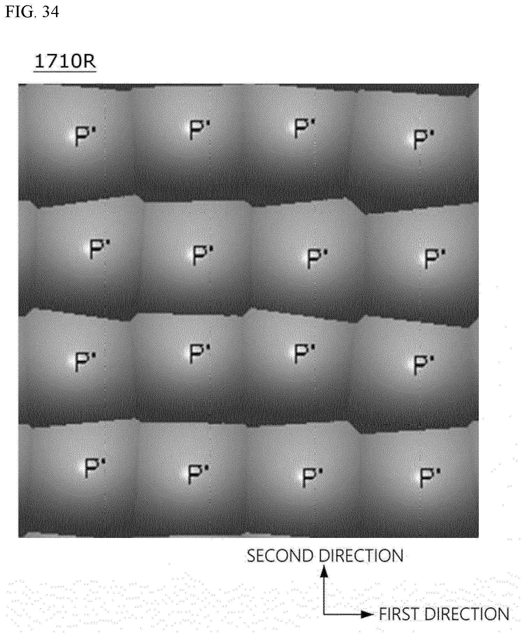

FIG. 32 is a plan view of a micro lens array according to yet another embodiment of the present invention, FIG. 33 is a view for describing a diameter of a micro lens forming the micro lens array according to yet another embodiment of the present invention, and FIG. 34 is an example of a first region 1710R of FIG. 32.

Referring to FIGS. 32 to 34, the micro lens array 1700 according to yet another embodiment of the present invention includes the first region 1710R including the plurality of first micro lenses 1710 having the first average diameter AP1, the second region 1720R surrounding the first region 1710R and including the plurality of second micro lenses 1720 having the second average diameter AP2, and the third region 1730R surrounding the second region 1720R and including the plurality of third micro lenses 1730 having the third average diameter AP3. Here, in the description of the micro lens array 1700, overlapping description of the same contents as the contents described with reference to FIGS. 1 to 31 will be omitted. Here, the first to third regions 1710R to 1730R including the first to third micro lenses having the first to third average diameters are mainly described, but this is for the sake of convenience of description, and the present invention is not limited thereto. The embodiment of the present invention may be a micro lens array including only the first region 1710R and the second region 1720R or may be expanded to a fourth region surrounding the third region 1730R and including a plurality of fourth micro lenses having the fourth average diameter, a fifth region surrounding the fourth region and including a plurality of fifth micro lenses having the fifth average diameter, etc.

Here, the first region 1710R may be a region including the center of the micro lens array 1700.

According to the embodiment of the present invention, the first region 1710R includes the plurality of first micro lenses 1710 disposed in a first direction, the second region 1720R includes the plurality of second micro lenses 1720 disposed in the first direction, and the third region 1730R includes a plurality of third micro lenses 1730 disposed in the first direction.

In addition, the plurality of first micro lenses 1710 are arranged in the second direction perpendicular to the first direction and intersecting the optical axis direction in the first region 1710R, the plurality of second micro lenses 1720 are arranged in the second direction in the second region 1720R, and the plurality of third micro lenses 1730 are arranged in the second direction in the third region 1730R.

In this case, the plurality of first micro lenses 1710 disposed in the outermost column and the outermost row of the first region 1710R may be disposed adjacent to the plurality of second micro lenses 1720 disposed in the second region 1720R, and the plurality of second micro lenses 1720 disposed in the second region 1720R may be disposed adjacent to the plurality of third micro lenses 1730 disposed in the third region 1730R. The plurality of second micro lenses 1720 may be disposed in a row to surround the outermost portion of the first region 1710R, and the plurality of third micro lenses 1730 may be disposed in a row to surround the second region 1720R. Accordingly, the first micro lens 1710 may be disposed on one side surface of each second micro lens 1720 in a direction perpendicular to the direction in which the plurality of second micro lenses 1720 are disposed, and the third micro lens 1730 may be disposed on the other side surface thereof. That is, the second micro lens 1720 may not be disposed on both side surfaces of each second micro lens 1720 in a direction perpendicular to the direction in which the plurality of second micro lenses 1720 are disposed. Likewise, the third micro lens 1730 may not be disposed on both side surfaces of each third micro lens 1730 in a direction perpendicular to the direction in which the plurality of third micro lenses 1730 are disposed. A distance from the center of the diffusion member 1700, that is, the micro lens array, to the second micro lens 1720 may be greater than a distance from the center of the micro lens array to the first micro lens 1710, and a distance from the center of the micro lens array to the third micro lens 1730 may be greater than the distance from the center of the micro lens array to the second micro lens 1720.

Here, the first average diameter AP1, the second average diameter AP2, and the third average diameter AP3 may be interchangeably used with a first average pitch AP1, a second average pitch AP2, and a third average pitch AP3, respectively. Here, the diameter may refer to a length of the micro lens in the first direction or the second direction. However, the diameter may refer to a length of the micro lens in a direction other than the first direction and the second direction. For example, the diameter may refer to a length of the micro lens array in the first direction, the second direction, or the third direction that is the optical axis direction.

In this case, the first average diameter AP1, the second average diameter AP2, and the third average diameter AP3 may be different. According to the embodiment of the present invention, the second average diameter AP2 may be greater than the first average diameter AP1, and the third average diameter AP3 may be greater than the second average diameter AP2. According to the embodiment of the present invention, the second average diameter AP2 may be 1.1 times or more greater than the first average diameter AP1, and the third average diameter AP3 may be 1.1 times or more greater than the second average diameter AP2. According to the embodiment of the present invention, a ratio of the second average diameter AP2 to the first average diameter AP1 may be greater than a ratio of the third average diameter AP3 to the second average diameter AP2. Accordingly, the energy of the output light may be dispersed, thereby increasing the safety for the user's eyes and preventing the deterioration of homogeneity due to interference.

According to the embodiment of the present invention, the plurality of first micro lenses 1710 in the first region 1710R may have different FoIs, the plurality of second micro lenses 1720 in the second region 1720R may have different FoIs, and the plurality of third micro lenses 1730 in the third region 1730R may have different FoIs. That is, the plurality of first micro lenses 1710 in the first region 1710R may have at least one of different aspherical shapes, radii of curvature, and conic constants, the plurality of second micro lenses 1720 in the second region 1720R may have at least one of different aspherical shapes, radii of curvature, and conic constants, and the plurality of third micro lenses 1730 in the third region 1730R may have at least one of different aspherical shapes, radii of curvature, and conic constants.

As described above, different FoIs for each region may be designed by random number generation described with reference to Equations 17 to 19 and FIG. 20.

In this case, the plurality of first micro lenses 1710 in the first region 1710R may have different FoIs in the first direction, the plurality of second micro lenses 1720 in the second region 1720R may have different FoIs in the first direction, and the plurality of third micro lenses 1730 in the third region 1730R may have different FoIs in the first direction. Alternatively, the plurality of first micro lenses 1710 in the first region 1710R may have different FoIs in the second direction, the plurality of second micro lenses 1720 in the second region 1720R may have different FoIs in the second direction, and the plurality of third micro lenses 1730 in the third region 1730R may have different FoIs in the second direction. That is, the plurality of first micro lenses 1710 in the first region 1710R may have at least one of different aspherical shapes, radii of curvature, and conic constants in the first direction, the plurality of second micro lenses 1720 in the second region 1720R may have at least one of different aspherical shapes, radii of curvature, and conic constants in the first direction, and the plurality of third micro lenses 1730 in the third region 1730R may have at least one of different aspherical shapes, radii of curvature, and conic constants in the first direction. Alternatively, the plurality of first micro lenses 1710 in the first region 1710R may have at least one of different aspherical shapes, radii of curvature, and conic constants in the second direction, the plurality of second micro lenses 1720 in the second region 1720R may have at least one of different aspherical shapes, radii of curvature, and conic constants in the second direction, and the plurality of third micro lenses 1730 in the third region 1730R may have at least one of different aspherical shapes, radii of curvature, and conic constants in the second direction.

In this case, an average FoI of the first region 1710R, an average FoI of the second region 1720R, and an average FoI of the third region 1730R may be the same. Here, the same average FoI may include an error range of ±5%. Accordingly, even when each micro lens included in the micro lens array 1700 has a different FoI, the surface illumination pattern output by the micro lens array 1700 may converge to the average FoI, thereby obtaining a homogeneous surface illumination pattern.

According to the embodiment of the present invention, the plurality of first micro lenses 1710 having the first average diameter AP1 in the first region 1710R may have different diameters. The plurality of second micro lenses 1720 having the second average diameter AP2 in the second region 1720R may have different diameters. The plurality of third micro lenses 1730 having the third average diameter AP3 in the third region 1730R may have different diameters.

To this end, the diameters of the plurality of first micro lenses 1710, the diameters of the plurality of second micro lenses 1720, and the diameters of the plurality of third micro lenses 1730 may each be designed by random number generation. When the plurality of micro lenses included in each region have different diameters, constructive interference and destructive interference due to the overlapping of diffraction angles according to the diffraction order can be minimized. The random number generation for the diameter of the micro lens may be referred by Equations 17 to 19 and FIG. 20.

Meanwhile, according to the embodiment of the present invention, the number and average diameters of micro lenses included in at least one of the first to third regions 1710R, 1720R, and 1730R is correlated with the average diameter of the micro lens included in another region surrounding at least one of the first to third regions 1710R, 1720R, and 1730R. The number of region-specific micro lenses according to the embodiment of the present invention may be referred by Equation 13.

According to the embodiment of the present invention, the average diameter of the micro lenses may vary depending on the distance D between the light source 110 and the micro lens array 1700. For example, as the distance D between the light source 110 and the micro lens array 1700 increases, the average diameter of the micro lenses may increase. Accordingly, the light flux concentration for a specific micro lens can be reduced, thereby making the user's eyes safe.

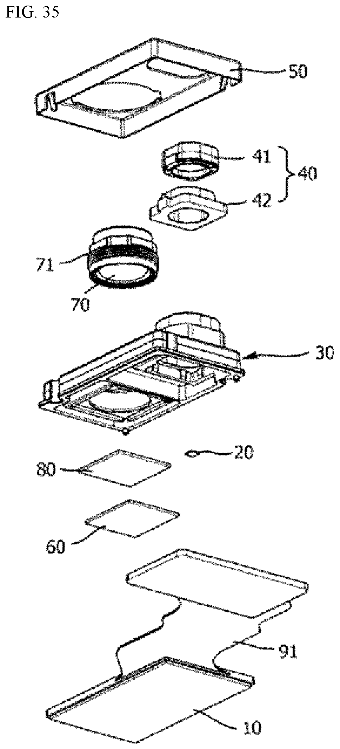

FIG. 35 is an exploded view of a camera module according to the embodiment of the present invention.

The camera module may include a light-emitting unit and a light-receiving unit. However, since components such as a substrate 10, a holder 30, and a shield can 50 are formed integrally and used in common for the light-emitting unit and the light-receiving unit, it may be difficult to distinguish the light-emitting unit from the light-receiving unit. In this case, each of the above components can be understood as a component of each of the light-emitting unit and the light-receiving unit. However, as a modified example, the common configuration of the substrate 10, the holder 30, and the shield can 50 may be provided separately to the light-emitting unit and the light-receiving unit.

The light-emitting unit may include the substrate 10, the light source 20, the holder 30, a diffusion member 41, a diffuser ring 42, and the shield can 50. The light-receiving unit may include the substrate 10, a sensor 60, a filter 80, the holder 30, a lens 70, a barrel 71, and the shield can 50.

The substrate 10 may include a PCB. The substrate 10 may be connected to a connector through a flexible PCB (FPCB) 91. The substrate 10 and the FPCB 91 may be formed as a rigid FPCB (RFPCB). The light source 20 and the sensor 60 may be disposed on the substrate 10. The substrate 10 may be disposed under the holder 30. The substrate 10 may include a terminal. A terminal of the substrate 10 may be connected to a connection portion of the shield can 50. The terminal of the substrate 10 may include a plurality of terminals. The terminal of the substrate 10 may include two terminals.

The light source 20 may be disposed on the substrate 10. The light source 20 may be disposed in contact with the substrate 10. The light source 20 may be disposed above the substrate 10. The light source 20 may be disposed on the substrate 10. The light source 20 may correspond to the light source 110.

The holder 30 may be disposed on the substrate 10. The holder 30 may be disposed in contact with the substrate 10. The holder 30 may be disposed above the substrate 10. The holder 30 may be disposed on the substrate 10. The holder 30 may be fixed to the substrate 10 by an adhesive. The holder 30 may accommodate the light source 20, the diffuser module 40, the sensor 60, and the filter 80 therein. The holder 30 may be a plastic injection-molded product. The holder 30 may be formed by injection molding.

The diffuser module 40 may include the diffuser member 41 and the diffuser ring 42. The diffuser module 40 may be formed integrally as in the modified example, but in the present embodiment, the diffuser module 40 may be manufactured separately as the diffuser member 41 and the diffuser ring 42 to increase moldability during injection molding. The diffuser member 41 and the diffuser ring 42 may be separated.

The diffuser member 41 may be a diffuser lens. The diffusion member 41 may correspond to the diffusion member 120 and the diffusion member 400, which have been described above. The diffusion member 41 may be disposed in the holder 30. The diffusion member 41 may be coupled to the holder 30. The diffusion member 41 may be fixed to the holder 30. The diffusion member 41 may be disposed on an optical path of light emitted from the light source 20. The diffusion member 41 may be disposed on the light source 20. The diffusion member 41 may be disposed above the light source 20. The diffusion member 41 may be a plastic injection-molded product. The diffusion member 41 may be formed by plastic injection molding. A height of an upper end of the diffusion member 41 may correspond to a height of an upper end of the lens 70. The diffusion member 41 may be inserted upward in a vertical direction and coupled to the holder 30. In this case, the upward may be a direction from a lower portion of the holder 30 to an upper portion of the holder 30. A part of the diffusion member 41 may overlap the holder 30 upward.

The diffuser ring 42 may be disposed in the holder 30. The diffusion ring 42 may be fixed to the holder 30. The diffusion ring 42 may be coupled to the holder 30. The diffuser ring 42 may be disposed under the diffusion member 41. The diffusion ring 42 may support the diffusion member 41. The diffusion ring 42 may be in contact with the diffusion member 41. The diffuser ring 42 may be a plastic injection-molded product. The diffuser ring 42 may be formed by plastic injection.

The shield can 50 may cover the body portion of the holder 30. The shield can 50 may include a cover. The shield can 50 may include a cover can. The shield can 50 may be a non-magnet. The shield can 50 may be formed of a metallic material. The shield can 50 may be formed of a metal plate. The shield can 50 may be electrically connected to the substrate 10. The shield can 50 may be connected to the substrate 10 through a solder ball. Accordingly, the shield can 50 may be grounded. The shield can 50 may block electromagnetic interference (EMI). In this case, the shield can 500 may be referred to as an "EMI shield can." In the present embodiment, since a high voltage is used inside the optical device, electromagnetic interference noise may increase, and the shield can 50 may block the electromagnetic interference noise.

The sensor 60 may be disposed on the substrate 10. The sensor 60 may be disposed at the other side of a partition wall of the holder 30 on the substrate 10. That is, the sensor 60 may be disposed at a side opposite to the light source 20 with respect to the partition wall of the holder 30. The sensor 60 may detect infrared rays. The sensor 60 may detect light of a specific wavelength among the infrared rays. The sensor 60 may detect light that has passed through the filter 80. The sensor 60 may detect light in the wavelength band of the light source 20. Accordingly, the sensor 60 may detect light emitted from the light source 20 and reflected in the subject to sense three-dimensional image information of the subject. An effective sensing region of the sensor 60 is disposed to correspond to the diffusion member 41, but the sensor 60 may be disposed to be biased entirely toward the partition wall. A circuit pattern of the sensor 60 and the like may be disposed on a portion of the sensor 60 biased toward the partition wall.

The lens 70 may be fixed in the barrel 71. The lens 70 may be a plastic injection-molded product. The lens 70 may be formed by plastic injection molding. The lens 70 may include a plurality of lenses.

The filter 80 may be disposed between the lens 70 and the sensor 60. The filter 80 may be a band pass filter that passes light in a specific wavelength. The filter 80 may pass through infrared rays. The filter 80 may pass through the light in the specific wavelength among the infrared rays. The filter 80 may pass through light in a wavelength band of light emitted by the light source 20. The filter 80 may block visible light. The filter 80 may be coupled to the holder 30. A groove having a size corresponding to that of the filter 80 may be formed in the holder 30, and the filter 80 may be inserted into the groove and fixed with an adhesive. An adhesive injection groove through which an adhesive is injected between the filter 80 and the holder 30 may be formed together in the groove of the holder 30. The filter 80 may be disposed at a position lower than a position of the diffuser ring 42.

Although the camera device extracting depth map using the TOF method has been mainly described above, the embodiment of the present invention is not limited thereto. The camera device according to the embodiment of the present invention may be a camera device extracting depth map using the structured light method. That is, the camera device according to the embodiment of the present invention may use structured light having a predetermined pattern as an output light signal and generate depth map using the disparity of the structured light. In addition, the camera device according to the embodiment of the present invention may be a camera device mounted on a vehicle to measure a distance between the vehicle and an object. That is, the camera device according to the embodiment of the present invention may be a light detection and ranging (LiDAR) camera.

Although embodiments have been mainly described above, these are only illustrative and do not limit the present invention, and those skilled in the art to which the present invention pertains can know that various modifications and applications that are not exemplified above are possible without departing from the essential characteristics of the embodiments. For example, each component specifically illustrated in the embodiments may be implemented by modification. In addition, differences related to these modifications and applications should be construed as being included in the scope of the present invention defined in the appended claims.

**Claims**

1. A camera device comprising:

   a light-emitting unit configured to radiate a light signal to an object;
   a light-receiving unit including an image sensor and configured to receive the light signal reflected from the object; and
   a depth map generation unit configured to generate a depth map of the object using the light signal received by the light-receiving unit,
   wherein the light-emitting unit includes:

   a light source; and
   a micro lens array disposed on the light source,

the micro lens array includes:

a first region including a plurality of first micro lenses having a first diameter;
a second region surrounding the first region and including a plurality of second micro lenses having a second diameter; and
a third region surrounding the second region and including a plurality of third micro lenses having a third diameter, and
the number and diameters of micro lenses included in at least one of the first to third regions is correlated with a diameter of a micro lens included in another region surrounding at least one of the first to third regions.

2. The camera device of claim 1, wherein the first diameter, the second diameter, and the third diameter are different.

3. The camera device of claim 2, wherein the first region includes x1 first micro lenses disposed in a first direction,

the second region includes x2 second micro lenses disposed in the first direction,
the third region includes x3 third micro lenses disposed in the first direction,
a product of the first diameter and the x1 is the same as a product of the second diameter and a number that is 1 less than the x1, and
a product of the second diameter and the x2 is the same as a product of the third diameter and a number that is 1 less than the x2.

4. The camera device of claim 3, wherein the x1 first micro lenses are arranged in a second direction perpendicular to the first direction in the first region,

the x2 second micro lenses are arranged in the second direction in the second region, and
the x3 third micro lenses are arranged in the second direction in the third region.

5. The camera device of claim 1, wherein the plurality of first micro lenses, the plurality of second micro lenses, and the plurality of third micro lenses protrude in a direction toward the light source, and
protrusion heights of the plurality of first micro lenses, protrusion heights of the plurality of second micro lenses, and protrusion heights of the plurality of third micro lenses are different.

6. The camera device of claim 3, wherein each of the plurality of first micro lenses, the plurality of second micro lenses, and the plurality of third micro lenses has an aspherical surface, and
the aspherical shape of each of the plurality of first micro lenses, the plurality of second micro lenses, and the plurality of third micro lenses is defined by an image height, a radius of curvature, and a conic constant.

7. The camera device of claim 6, wherein the aspherical shape of each of the plurality of first micro lenses, the plurality of second micro lenses, and the plurality of third micro lenses is defined by Equation 1 below:

$$Z = \frac{\frac{x^2}{R_x} + \frac{y^2}{R_y}}{1 + \sqrt{1 - (1 + K_x)\left(\frac{x}{R_x}\right)^2 - (1 + K_y)\left(\frac{y}{R_y}\right)^2}}$$

where x denotes an X-axis image height, y denotes a Y-axis image height, $R_x$ denotes an X-axis curvature radius, $R_y$ denotes a Y-axis curvature radius, $K_x$ denotes an X-axis conic constant, and $K_y$ denotes a Y-axis conic constant.

8. The camera device of claim 1, wherein the number and diameters of first micro lenses included in the first region are correlated with a diameter of the second micro lens included in the second region.

9. The camera device of claim 1, wherein a distance between a center of the micro lens array to the second micro lens is greater than a distance from the center of the micro lens array to the first micro lens.

10. The camera device of claim 1, wherein the first diameter, the second diameter, and the third diameter vary depending on a distance between the light source and the micro lens array.

FIG. 1

1000

| LIGHT-EMITTING UNIT | 100 |
| LIGHT SOURCE | 110 |
| DIFFUSION MEMBER | 120 |
| LIGHT-RECEIVING UNIT | 200 |
| DEPTH MAP GENERATION UNIT | 300 |
| CONTROL UNIT | 500 |

FIG. 2

FIG. 3

THIRD DIRECTION

FIRST DIRECTION

FIG. 4

FIG. 5

400

430R

420R

410R

SECOND DIRECTION

FIRST DIRECTION

FIG. 6

FIG. 8

(a)

(b)

FIG. 9

FIG. 10

(a)

(b)

FIG. 11

(a)

(b)

FIG. 12

FIG. 13

FIG. 14

FIG. 15

FIG. 16

FIG. 17

FIG. 18

THIRD DIRECTION

FIRST DIRECTION

FIG. 19

FIG. 20

$$p_{env} = N_{env}x_{[0,1]}$$

$$x_{spl} = RS_{env}^{-1}(p_{env})$$

$$p_{accept} = x_{[0,1]}$$

$$f_x(x_{spl}) > p_{accept}f_{env}(x_{spl})$$

No

Yes

$$x_{spl}$$

FIG. 21

| Average | | Pitch [mm] | NA (order No.) | | | | |
|---|---|---|---|---|---|---|---|
| | | | 1 | 2 | 3 | 4 | 5 |
| 300um | 1 | 0.30354224 | 0.0030968 | 0.0061935 | 0.0092903 | 0.0123871 | 0.0154838 |
| | 2 | 0.29873245 | 0.0031466 | 0.0062933 | 0.0094399 | 0.0125865 | 0.0157331 |
| | 3 | 0.30306455 | 0.0031016 | 0.0062033 | 0.0093049 | 0.0124066 | 0.0155082 |
| | 4 | 0.29851265 | 0.0031489 | 0.0062979 | 0.0094468 | 0.0125958 | 0.0157447 |
| | 5 | 0.2975165 | 0.0031595 | 0.0063190 | 0.0094785 | 0.0126380 | 0.0157974 |
| | 6 | 0.29759254 | 0.0031587 | 0.0063174 | 0.0094760 | 0.0126347 | 0.0157934 |
| | 7 | 0.29730794 | 0.0031617 | 0.0063234 | 0.0094851 | 0.0126468 | 0.0158085 |
| | 8 | 0.29810404 | 0.0031533 | 0.0063065 | 0.0094598 | 0.0126130 | 0.0157663 |
| | 9 | 0.30161645 | 0.0031165 | 0.0062331 | 0.0093496 | 0.0124662 | 0.0155827 |
| | 10 | 0.29751314 | 0.0031595 | 0.0063190 | 0.0094786 | 0.0126381 | 0.0157976 |
| | 11 | 0.29920764 | 0.0031416 | 0.0062833 | 0.0094249 | 0.0125665 | 0.0157082 |
| | 12 | 0.30235874 | 0.0031089 | 0.0062178 | 0.0093267 | 0.0124356 | 0.0155444 |
| | 13 | 0.29929514 | 0.0031407 | 0.0062814 | 0.0094221 | 0.0125629 | 0.0157036 |
| | 14 | 0.29966892 | 0.0031368 | 0.0062736 | 0.0094104 | 0.0125472 | 0.0156840 |
| | 15 | 0.29930599 | 0.0031406 | 0.0062812 | 0.0094218 | 0.0125624 | 0.0157030 |
| | 16 | 0.29693473 | 0.0031657 | 0.0063314 | 0.0094970 | 0.0126627 | 0.0158284 |
| 400um | 1 | 0.40575243 | 0.0023167 | 0.0046334 | 0.0069501 | 0.0092667 | 0.0115834 |
| | 2 | 0.39877864 | 0.0023572 | 0.0047144 | 0.0070716 | 0.0094288 | 0.0117860 |
| | 3 | 0.3987824 | 0.0023572 | 0.0047144 | 0.0070715 | 0.0094287 | 0.0117859 |
| | 4 | 0.40079208 | 0.0023454 | 0.0046907 | 0.0070361 | 0.0093814 | 0.0117268 |
| | 5 | 0.40315736 | 0.0023316 | 0.0046632 | 0.0069948 | 0.0093264 | 0.0116580 |
| | 6 | 0.40397905 | 0.0023269 | 0.0046537 | 0.0069806 | 0.0093074 | 0.0116343 |
| | 7 | 0.39927914 | 0.0023542 | 0.0047085 | 0.0070627 | 0.0094170 | 0.0117712 |
| | 8 | 0.40397088 | 0.0023269 | 0.0046538 | 0.0069807 | 0.0093076 | 0.0116345 |
| | 9 | 0.39387162 | 0.0023866 | 0.0047731 | 0.0071597 | 0.0095463 | 0.0119328 |
| | 10 | 0.39771758 | 0.0023635 | 0.0047270 | 0.0070905 | 0.0094539 | 0.0118174 |
| | 11 | 0.40390133 | 0.0023273 | 0.0046546 | 0.0069819 | 0.0093092 | 0.0116365 |
| | 12 | 0.39844565 | 0.0023592 | 0.0047183 | 0.0070775 | 0.0094367 | 0.0117958 |
| | 13 | 0.40155633 | 0.0023409 | 0.0046818 | 0.0070227 | 0.0093636 | 0.0117045 |
| | 14 | 0.398412 | 0.0023594 | 0.0047187 | 0.0070781 | 0.0094375 | 0.0117968 |
| | 15 | 0.39658713 | 0.0023702 | 0.0047404 | 0.0071107 | 0.0094809 | 0.0118511 |
| | 16 | 0.39552542 | 0.0023766 | 0.0047532 | 0.0071298 | 0.0095063 | 0.0118829 |
| 500um | 1 | 0.50614915 | 0.0018572 | 0.0037143 | 0.0055715 | 0.0074286 | 0.0092858 |
| | 2 | 0.49751442 | 0.0018894 | 0.0037788 | 0.0056682 | 0.0075576 | 0.0094470 |
| | 3 | 0.49931345 | 0.0018826 | 0.0037652 | 0.0056478 | 0.0075303 | 0.0094129 |
| | 4 | 0.49768697 | 0.0018887 | 0.0037775 | 0.0056662 | 0.0075549 | 0.0094437 |
| | 5 | 0.50304459 | 0.0018686 | 0.0037372 | 0.0056059 | 0.0074745 | 0.0093431 |
| | 6 | 0.49946821 | 0.0018820 | 0.0037640 | 0.0056460 | 0.0075280 | 0.0094100 |
| | 7 | 0.50335249 | 0.0018675 | 0.0037350 | 0.0056024 | 0.0074699 | 0.0093374 |
| | 8 | 0.50075802 | 0.0018772 | 0.0037543 | 0.0056315 | 0.0075086 | 0.0093858 |
| | 9 | 0.50507418 | 0.0018611 | 0.0037222 | 0.0055833 | 0.0074445 | 0.0093056 |
| | 10 | 0.49632745 | 0.0018939 | 0.0037878 | 0.0056817 | 0.0075756 | 0.0094696 |
| | 11 | 0.50007834 | 0.0018797 | 0.0037594 | 0.0056391 | 0.0075188 | 0.0093985 |
| | 12 | 0.49444793 | 0.0019011 | 0.0038022 | 0.0057033 | 0.0076044 | 0.0095056 |
| | 13 | 0.48854282 | 0.0019241 | 0.0038482 | 0.0057723 | 0.0076964 | 0.0096204 |
| | 14 | 0.50080167 | 0.0018770 | 0.0037540 | 0.0056310 | 0.0075080 | 0.0093850 |
| | 15 | 0.49600538 | 0.0018951 | 0.0037903 | 0.0056854 | 0.0075806 | 0.0094757 |
| | 16 | 0.49790435 | 0.0018879 | 0.0037758 | 0.0056637 | 0.0075517 | 0.0094396 |
| | 17 | 0.49720039 | 0.0018906 | 0.0037812 | 0.0056718 | 0.0075623 | 0.0094529 |
| | 18 | 0.4945887 | 0.0019006 | 0.0038011 | 0.0057017 | 0.0076023 | 0.0095028 |
| | 19 | 0.49105538 | 0.0019142 | 0.0038285 | 0.0057427 | 0.0076570 | 0.0095712 |
| | 20 | 0.499719 | 0.0018811 | 0.0037621 | 0.0056432 | 0.0075242 | 0.0094053 |

FIG. 22A

FIG. 22B

FIG. 23A

1700

SECOND DIRECTION

FIRST DIRECTION

FIG. 23B

1700

1701

SECOND DIRECTION

FIRST DIRECTION

FIG. 24A

AVERAGE 0.3002
STANDARD
DEVIATION 0.01094
N 36

EP 4 546 770 A1

54

FIG. 24B

| | |
|---|---|
| AVERAGE | 0.3012 |
| STANDARD DEVIATION | 0.01130 |
| N | 36 |

EP 4 546 770 A1

FIG. 25A

|  |  |
|---|---|
| AVERAGE | 54.02 |
| STANDARD DEVIATION | 0.9746 |
| N | 36 |

FIG. 25B

EP 4 546 770 A1

FIG. 26

|  | X pitch | Y pitch | X_k | X_R | Y_k | Y_R | X Fol_simul | Y Fol_simul |
|---|---|---|---|---|---|---|---|---|
| Avg. | 0.3002 | 0.3012 |  |  |  |  | 54.020 | 62.060 |
| MLA1 | 0.2946944 | 0.2982942 | -0.9700 | 0.1180 | -1.0650 | 0.0872 | 53.577 | 62.052 |
| MLA2 | 0.2925939 | 0.3189439 | -0.9200 | 0.1193 | -1.0930 | 0.0930 | 53.151 | 61.304 |
| MLA3 | 0.3014261 | 0.3192728 | -1.0000 | 0.1190 | -1.1380 | 0.0845 | 52.909 | 60.911 |
| MLA4 | 0.2953779 | 0.3080853 | -1.0000 | 0.1178 | -1.1380 | 0.0856 | 54.712 | 63.907 |
| MLA5 | 0.2923919 | 0.319187 | -1.0800 | 0.1150 | -1.2000 | 0.0838 | 57.270 | 61.624 |
| MLA6 | 0.3010938 | 0.3097814 | -1.0650 | 0.1130 | -1.1400 | 0.0820 | 54.528 | 62.271 |
| MLA7 | 0.2814362 | 0.2983538 | -1.0000 | 0.1100 | -1.1400 | 0.0835 | 56.022 | 62.031 |
| MLA8 | 0.3043979 | 0.3009261 | -1.1600 | 0.1085 | -1.1400 | 0.0835 | 53.356 | 61.441 |
| MLA9 | 0.2923193 | 0.2911278 | -1.1600 | 0.1080 | -1.0750 | 0.0835 | 52.170 | 61.403 |
| MLA10 | 0.300682 | 0.304715 | -1.1600 | 0.1100 | -1.0870 | 0.0880 | 52.096 | 63.628 |
| MLA11 | 0.3317774 | 0.2882226 | -1.1600 | 0.1150 | -1.0872 | 0.0818 | 54.695 | 62.496 |
| MLA12 | 0.2972268 | 0.3113292 | -1.0800 | 0.1080 | -1.1500 | 0.0827 | 53.541 | 60.261 |
| MLA13 | 0.2801314 | 0.3014672 | -1.0300 | 0.1050 | -1.1300 | 0.0810 | 53.088 | 62.997 |
| MLA14 | 0.2875763 | 0.3242023 | -1.1600 | 0.1057 | -1.1600 | 0.0830 | 52.638 | 61.820 |
| MLA15 | 0.2880928 | 0.2991006 | -1.1600 | 0.1040 | -1.1700 | 0.0770 | 54.711 | 63.311 |
| MLA16 | 0.2962863 | 0.3057479 | -1.1600 | 0.1080 | -1.1700 | 0.0780 | 54.253 | 63.390 |
| MLA17 | 0.3019046 | 0.2953589 | -1.1600 | 0.1068 | -1.1600 | 0.0762 | 54.475 | 61.997 |
| MLA18 | 0.3104459 | 0.3081099 | -1.1600 | 0.1084 | -1.2100 | 0.0793 | 54.034 | 62.112 |
| MLA19 | 0.2846729 | 0.3077253 | -1.1000 | 0.1068 | -1.1500 | 0.0797 | 52.469 | 62.063 |
| MLA20 | 0.2963449 | 0.2889705 | -1.1000 | 0.1105 | -1.1500 | 0.0790 | 54.480 | 60.989 |
| MLA21 | 0.3013073 | 0.2898844 | -1.1000 | 0.1113 | -1.1350 | 0.0770 | 53.099 | 61.271 |
| MLA22 | 0.2972306 | 0.2789928 | -1.1000 | 0.1088 | -1.1350 | 0.0750 | 54.187 | 60.959 |
| MLA23 | 0.283998 | 0.2908092 | -1.1000 | 0.1094 | -1.1350 | 0.0770 | 54.706 | 61.338 |
| MLA24 | 0.3087158 | 0.3111939 | -1.1800 | 0.1093 | -1.1700 | 0.0813 | 52.850 | 62.277 |
| MLA25 | 0.3198181 | 0.2846685 | -1.1800 | 0.1089 | -1.1000 | 0.0795 | 52.952 | 62.149 |
| MLA26 | 0.3060482 | 0.3019145 | -1.1800 | 0.1110 | -1.1700 | 0.0795 | 54.057 | 63.449 |
| MLA27 | 0.2938536 | 0.2836536 | -1.1000 | 0.1105 | -1.1500 | 0.0774 | 53.317 | 62.720 |
| MLA28 | 0.3143011 | 0.297168 | -1.1500 | 0.1113 | -1.1900 | 0.0800 | 53.970 | 63.126 |
| MLA29 | 0.3039734 | 0.2851221 | -1.1500 | 0.1085 | -1.0920 | 0.0789 | 55.519 | 62.754 |
| MLA30 | 0.2975346 | 0.2956893 | -1.1500 | 0.1081 | -1.1500 | 0.0798 | 55.270 | 60.259 |
| MLA31 | 0.3023117 | 0.3080609 | -1.1480 | 0.1005 | -1.1500 | 0.0850 | 52.455 | 63.091 |
| MLA32 | 0.3122394 | 0.2890987 | -1.1500 | 0.1100 | -1.1480 | 0.0796 | 52.578 | 62.445 |
| MLA33 | 0.3096784 | 0.2993326 | -1.1500 | 0.1095 | -1.1700 | 0.0830 | 53.383 | 62.113 |
| MLA34 | 0.3089983 | 0.3126376 | -1.1450 | 0.1145 | -1.1700 | 0.0800 | 53.631 | 62.039 |
| MLA35 | 0.311402 | 0.3040164 | -1.1450 | 0.1158 | -1.1700 | 0.0808 | 55.072 | 60.787 |
| MLA36 | 0.3052253 | 0.3113797 | -1.1000 | 0.1119 | -1.1700 | 0.0808 | 53.235 | 61.526 |

58

FIG. 27

FIG. 28A

FIG. 28B

FIG. 29

| | Illuminance image | X FoI_simul. | Y FoI_simul. |
|---|---|---|---|
| Random MLA | | 54.020 | 62.060 |
| MLA 7 | | 56.022 | 62.031 |
| MLA 9 | | 52.170 | 61.403 |
| MLA 29 | | 55.519 | 62.754 |
| MLA 31 | | 52.455 | 63.091 |

FIG. 30

1700

SECOND DIRECTION

FIRST DIRECTION

1700R1

1700R2

FIG .31

<u>1700</u>

1700RA　　　　　　　　　　1700RB

SECOND DIRECTION

FIRST DIRECTION

FIG. 32

FIG. 33

FIG. 34

1710R

SECOND DIRECTION

FIRST DIRECTION

FIG. 35

## INTERNATIONAL SEARCH REPORT

| International application No. |
|---|
| **PCT/KR2023/008695** |

| A. | CLASSIFICATION OF SUBJECT MATTER |
|---|---|
| | **H04N 13/271**(2018.01)i; **H04N 13/254**(2018.01)i; **G02B 3/02**(2006.01)i; **G02B 3/00**(2006.01)i; **H04N 13/229**(2018.01)i |

According to International Patent Classification (IPC) or to both national classification and IPC

| B. | FIELDS SEARCHED |
|---|---|

Minimum documentation searched (classification system followed by classification symbols)

H04N 13/271(2018.01); G02B 3/00(2006.01); G03B 17/12(2006.01); G03B 35/02(2006.01); H04N 13/254(2018.01); H04N 5/225(2006.01); H04N 5/369(2011.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 카메라(camera), 깊이 정보(depth information), 마이크로 렌즈 어레이(microlens array), 직경(diameter), 개수(number), 상관관계(correlation)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2021-0063674 A (LG INNOTEK CO., LTD.) 02 June 2021 (2021-06-02)<br>See paragraphs [0032]-[0037], [0057], [0063]-[0068], [0091] and [0093]; claims 2 and 4; and figures 1, 5 and 10-11. | 1-2,6-10 |
| Y | | 5 |
| A | | 3-4 |
| Y | KR 10-2021-0156910 A (SAMSUNG ELECTRONICS CO., LTD.) 28 December 2021 (2021-12-28)<br>See paragraph [0057]; and figure 7. | 5 |
| A | KR 10-2021-0115765 A (LG INNOTEK CO., LTD.) 27 September 2021 (2021-09-27)<br>See paragraphs [0067]-[0089]; and figures 4-6. | 1-10 |
| A | KR 10-2021-0151474 A (KOREA ADVANCED INSTITUTE OF SCIENCE AND TECHNOLOGY) 14 December 2021 (2021-12-14)<br>See paragraphs [0032]-[0043]; and figure 1. | 1-10 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 September 2023** | **18 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/008695** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2017-0038502 A1 (QUALCOMM INCORPORATED) 09 February 2017 (2017-02-09)<br>See paragraphs [0035]-[0047]; and figure 3. | 1-10 |

Form PCT/ISA/210 (second sheet) (July 2022)

**INTERNATIONAL SEARCH REPORT**
**Information on patent family members**

International application No.

**PCT/KR2023/008695**

| Patent document cited in search report | | | Publication date (day/month/year) | Patent family member(s) | | | Publication date (day/month/year) |
|---|---|---|---|---|---|---|---|
| KR | 10-2021-0063674 | A | 02 June 2021 | CN | 114762308 | A | 15 July 2022 |
| | | | | EP | 4068746 | A1 | 05 October 2022 |
| | | | | JP | 2023-504023 | A | 01 February 2023 |
| | | | | US | 2023-0020189 | A1 | 19 January 2023 |
| | | | | WO | 2021-107465 | A1 | 03 June 2021 |
| KR | 10-2021-0156910 | A | 28 December 2021 | CN | 113824856 | A | 21 December 2021 |
| | | | | US | 2021-0400216 | A1 | 23 December 2021 |
| KR | 10-2021-0115765 | A | 27 September 2021 | | None | | |
| KR | 10-2021-0151474 | A | 14 December 2021 | US | 2021-0385376 | A1 | 09 December 2021 |
| US | 2017-0038502 | A1 | 09 February 2017 | CN | 107852450 | A | 27 March 2018 |
| | | | | EP | 3332544 | A1 | 13 June 2018 |
| | | | | JP | 2018-529256 | A | 04 October 2018 |
| | | | | KR | 10-2018-0037957 | A | 13 April 2018 |
| | | | | WO | 2017-023552 | A1 | 09 February 2017 |

Form PCT/ISA/210 (patent family annex) (July 2022)